# FASCICULE DE BREVET EUROPEEN

(11) **EP 3 887 470 B1**
(45) Date de publication et mention de la délivrance du brevet: **04.01.2023**
(21) Numéro de dépôt: 19868230.4
(22) Date de dépôt: 27.11.2019
(51) Int. Cl.: C09J 179/04, C03C 14/00

(54) **MATÉRIAU MULTI-COMPOSITE À BASE DE COMPOSITE VERRE-RÉSINE**
AUF GLAS-HARZ-VERBUND BASIERENDER MULTIVERBUNDSTOFF
GLASS-RESIN COMPOSITE-BASED MULTI-COMPOSITE MATERIAL

(30) Priorité: 30.11.2018 FR 1872101; 05.02.2019 FR 1901090
(43) Date de publication de la demande: 06.10.2021
(73) Titulaire: COMPAGNIE GENERALE DES ETABLISSEMENTS MICHELIN, 63040 Clermont-Ferrand (FR)
(72) Inventeur: FEDURCO, Milan, 63040 Clermont-Ferrand Cedex 9 (FR); DELFINO, Antonio, 63040 Clermont-Ferrand Cedex 9 (FR); TORNARE, Marcel, 63040 Clermont-Ferrand Cedex 9 (FR)
(74) Mandataire: Wroblewski, Nicolas Paul André
(86) Numéro de dépôt international: PCT/FR2019/052815
(87) Numéro de publication internationale: WO 2020/109721

(56) Documents cités:
- WO-A1-2015/090973
- WO-A1-2015/165777
- WO-A1-2016/116457
- WO-A2-2014/004900

## Description

### DOMAINE TECHNIQUE DE L'INVENTION

Le domaine de la présente invention est celui des matériaux composites à base de monobrins du type en « CVR » (abrégé pour Composite Verre-Résine) à hautes propriétés mécaniques et thermiques, comportant des fibres de verre multifilamentaires continues, unidirectionnelles, noyées dans une résine thermodurcissable polyester.

Elle se rapporte particulièrement à de tels matériaux composites sous forme d'éléments de renforcement longilignes ou « Renforts », utilisables notamment pour le renforcement de produits semi-finis ou d'articles finis en caoutchouc tels que des bandages pour véhicules, du type pneumatiques ou non pneumatiques.

### ETAT DE LA TECHNIQUE

Le brevet EP 1 167 080 (ou US 7 032 637) a depuis longtemps décrit des monobrins en CVR à très hautes propriétés mécaniques, comportant des fibres de verre continues, unidirectionnelles, imprégnées dans une matrice de résine polyester du type thermo-durcissable, en particulier vinylester. Cette demande a démontré qu'il était avantageusement possible, grâce à ces très hautes propriétés, de substituer à des câbles d'acier de tels monobrins en CVR, comme renforts de bandages pneumatiques, permettant d'alléger ainsi notablement la structure de ces bandages.

Plus récemment, les demandes de brevet WO 2015/014578 et WO 2015/014579, déposées par la Demanderesse, ont décrit des monobrins en CVR avec des propriétés physiques et mécaniques encore améliorées, obtenues grâce à un procédé d'obtention spécifique.

Enfin, les demandes de brevet WO 2015/090973, WO 2015/165777, WO 2016/116457, WO 2016/189209 et WO 2016/189126, déposées par la Demanderesse, ont également décrit des renforts multi-composites à base de tels monobrins en CVR avec cette fois une couche d'une matière thermoplastique, en particulier polyester, recouvrant individuellement chaque monobrin ou collectivement un paquet de plusieurs monobrins. Cette couche de matière thermoplastique s'est révélée, grâce notamment à un effet supposé de frettage, conférer à ces renforts composites des propriétés en compression, flexion ou sous cisaillement transverse qui ont été notablement améliorées, en particulier à température élevée, par rapport à celles des monobrins en CVR connus jusqu'alors.

L'expérience montre toutefois que ces matériaux ou renforts multi-composites à base de monobrins en CVR peuvent être encore améliorés, notamment en ce qui concerne leur adhésion à des matières thermoplastiques polyester.

En outre, il s'est avéré que les monobrins en CVR, malgré leur excellente tenue mécanique, pouvaient dans des conditions extrêmes d'utilisation telles que des phénomènes de flexion, compression, cisaillement très importants, ou encore d'abrasion sévère, notamment sous un environnement thermique et/ou chimique pénalisant, être exposés à des risques de délamination plus ou moins prononcée, accompagnée le cas échéant en surface de migration de certains filaments de verre vers l'extérieur du monobrin, avec risque de propagation de fissures.

### BREVE DESCRIPTION DE L'INVENTION

Poursuivant ses recherches, la Demanderesse a découvert un moyen d'améliorer encore les performances de ces matériaux ou renforts composites en CVR, en revêtant ces derniers d'une résine spécifique, du type thermodurcissable, jusqu'ici non utilisée sur ce type de composites.

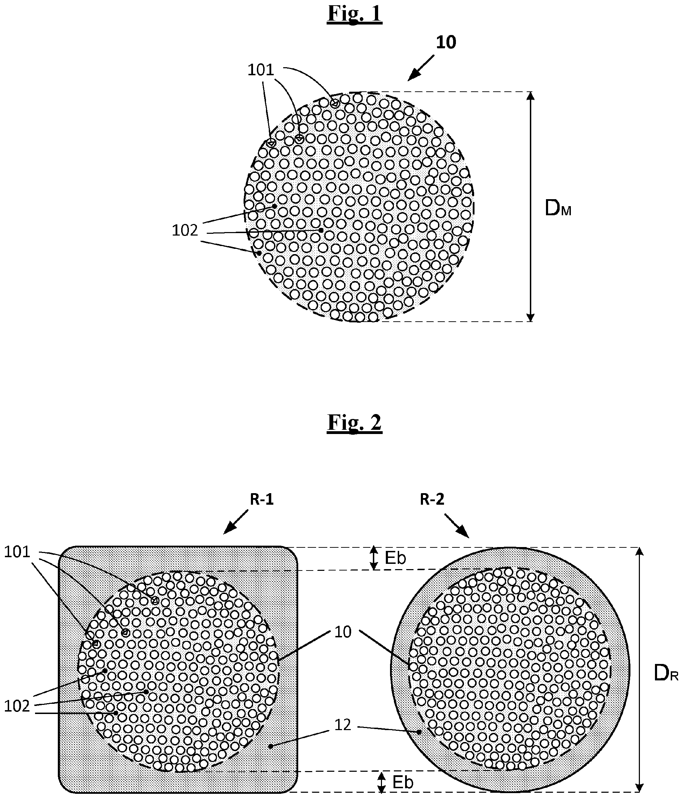

Ainsi, selon un premier objet, la présente invention concerne (en référence par exemple aux figures 1 et 2 annexées) un matériau ou renfort multi-composite (R1, R2) comportant au moins un monobrin (10) en composite verre-résine (en abrégé « CVR ») comportant des filaments de verre (101) noyés dans une résine polyester thermodurcie (102), caractérisé en ce que ledit monobrin en CVR est revêtu d'au moins une couche (12) de résine benzoxazine.

Comparativement à l'art antérieur exposé ci-dessus, la couche de résine benzoxazine s'est révélée présenter plusieurs vertus :
- une très bonne compatibilité chimique avec la résine polyester du monobrin, avec à la clé une excellente adhésion de la benzoxazine au monobrin en CVR ;
- grâce à cette excellente adhésion associée au fait que les deux résines insaturées (polyester et benzoxazine) ont des modules en extension du même ordre de grandeur, la capacité de réparer, fretter et donc renforcer le monobrin CVR en périphérie sans nuire aux propriétés mécaniques d'ensemble de la matrice ;
- offrir également au monobrin en CVR une adhésion améliorée à une couche de gainage en polyester thermoplastique, comparativement aux solutions décrites dans les demandes précitées WO 2015/090973, WO 2015/165777, WO 2016/116457, WO 2016/189209 et WO 2016/189126 ;
- enfin, ce qui n'est pas le moindre, la capacité d'être polyfonctionnelle, utilisable en couche très fine (comme par exemple une couche adhésive) comme en couche épaisse (par exemple sous forme d'une couche de gainage ou frettage externe).

L'invention concerne également tout stratifié multicouche comportant au moins un matériau ou renfort multi-composite selon l'invention, disposé entre et au contact de deux couches de composition de caoutchouc, notamment diénique.

L'invention concerne également l'utilisation d'un matériau multi-composite ou stratifié multicouche selon l'invention, comme élément de renforcement de produits semi-finis ou d'articles finis en caoutchouc tels que des bandages, pneumatiques ou non pneumatiques.

L'invention concerne également ces produits semi-finis, articles en caoutchouc et bandages eux-mêmes, tant à l'état cru (c'est-à-dire avant cuisson ou vulcanisation) qu'à l'état cuit (après cuisson). Les bandages de l'invention, en particulier, peuvent être destinés à des véhicules à moteur du type tourisme, 4x4, "SUV" (Sport Utility Vehicles), mais également à des véhicules industriels choisis parmi camionnettes, "Poids-lourd" - i.e., métro, bus, engins de transport routier (camions, tracteurs, remorques), véhicules hors-la-route -, engins agricoles ou de Génie civil, avions, autres véhicules utilitaires de transport ou de manutention.

Le renfort multi-composite et le stratifié multicouches de l'invention sont tout particulièrement utilisables comme éléments de renforcement dans des armatures de sommet (ou ceintures) ou dans les armatures de carcasse de bandages pneumatiques, comme décrit notamment dans les demandes de brevet précitées. Ils pourraient également être présents dans la zone bourrelet de tels bandages.

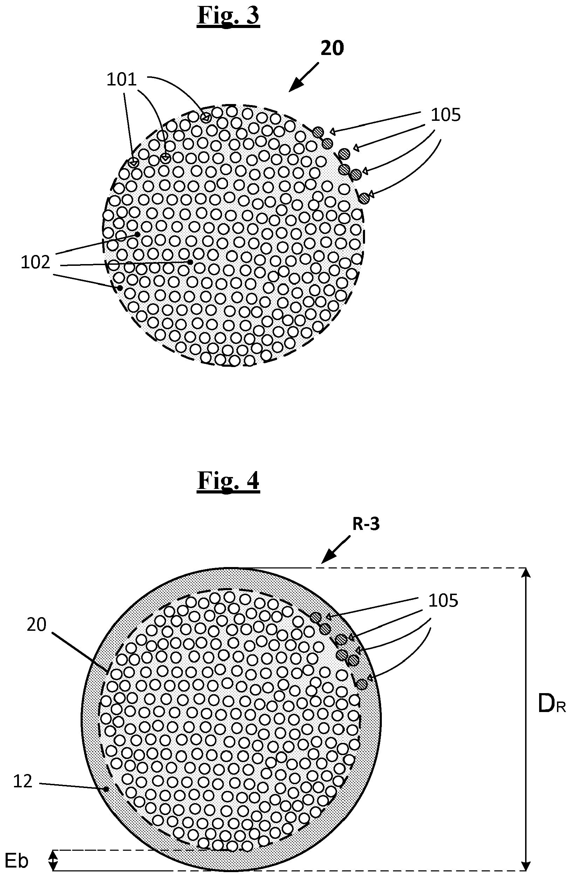

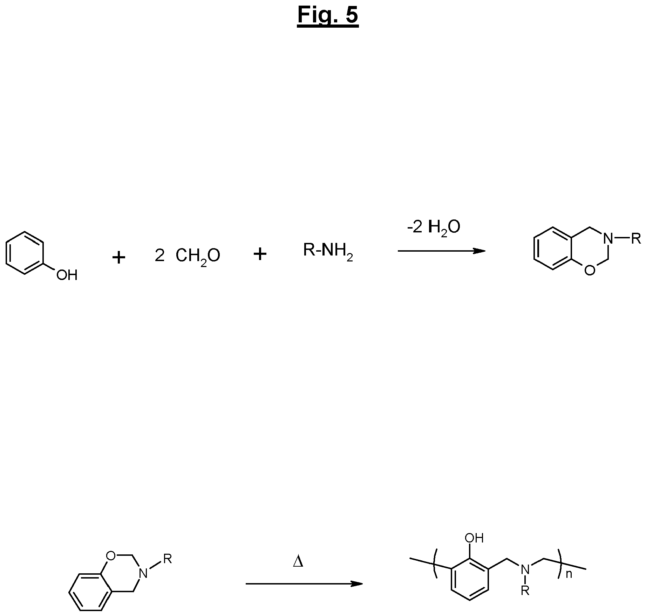

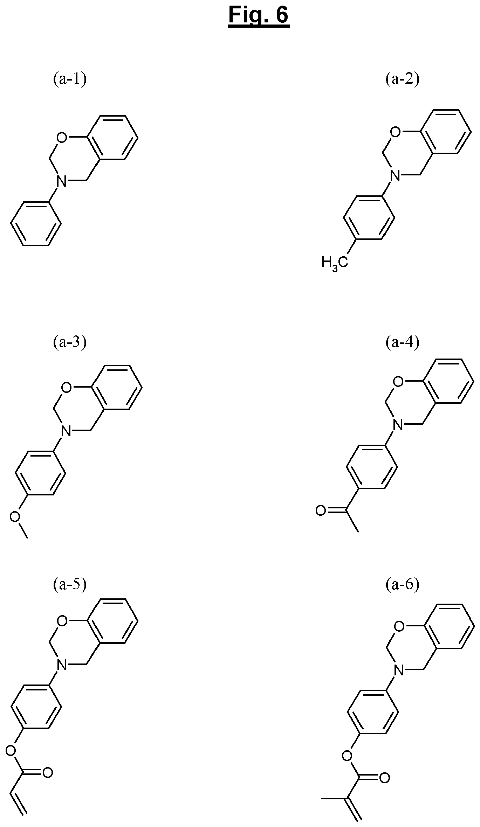

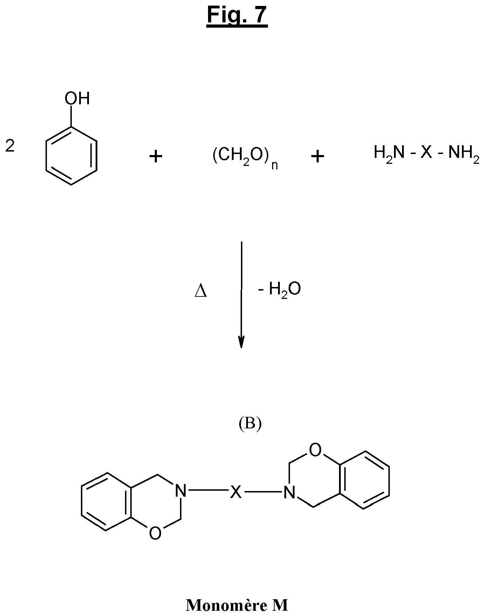

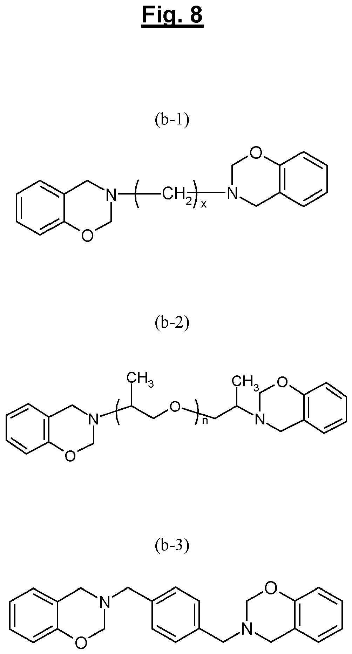

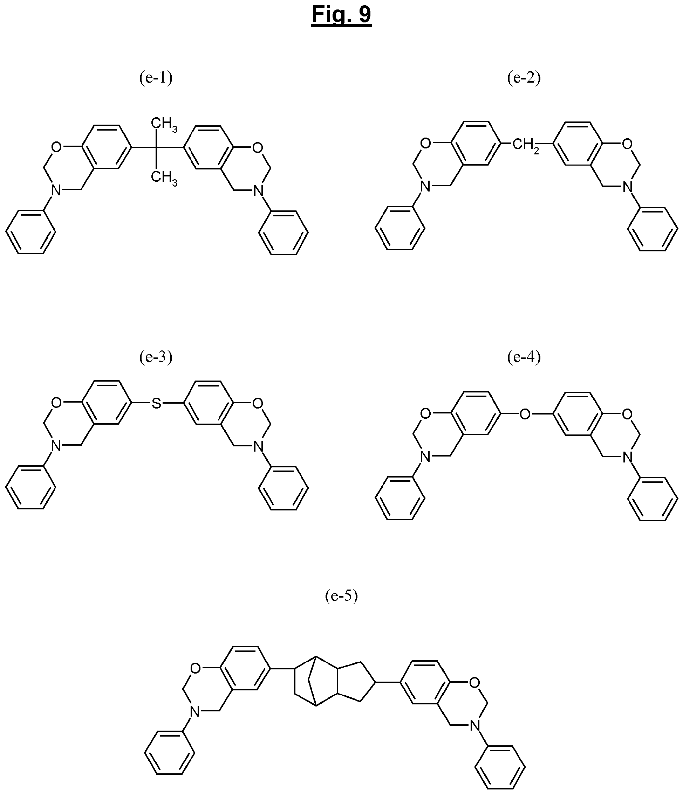

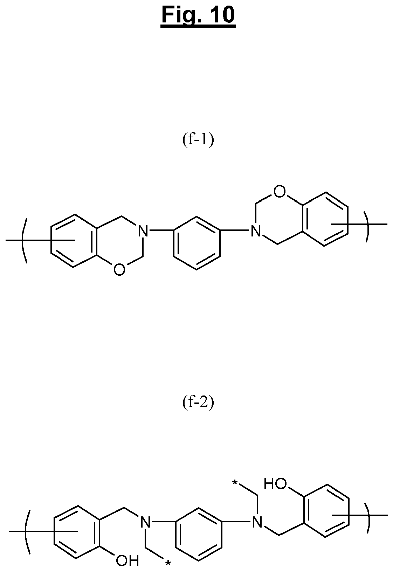

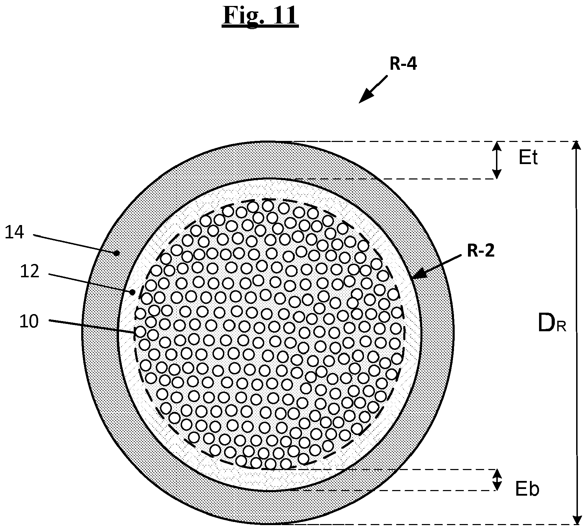

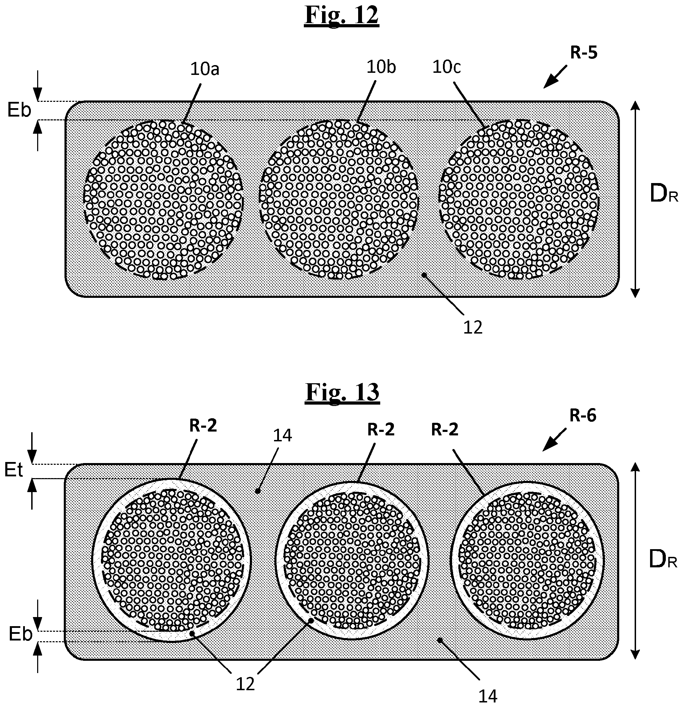

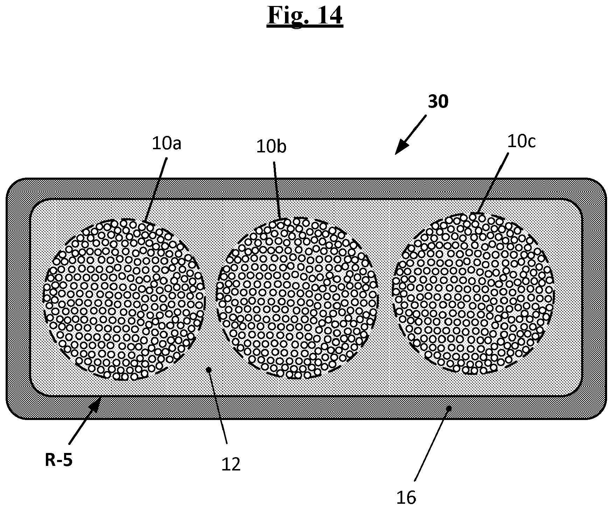

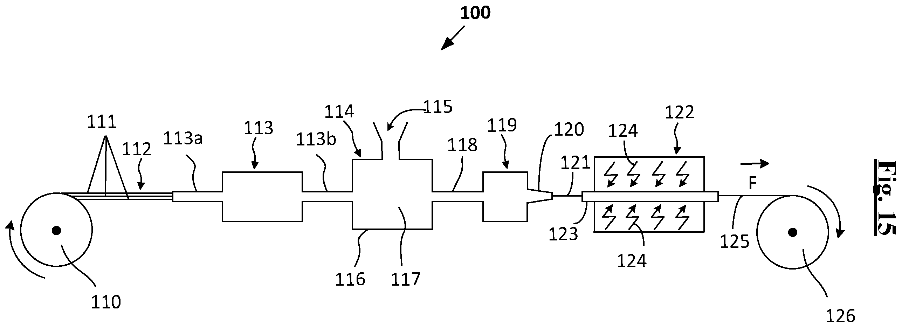

L'invention ainsi que ses avantages seront aisément compris à la lumière de la description détaillée et des exemples de réalisation qui suivent, ainsi que des figures relatives à ces exemples qui schématisent (c'est-à-dire sans respect d'une échelle spécifique, pour ne pas nuire à la clarté de l'exposé) :
- en coupe transversale, un monobrin (10) en CVR utilisable dans un matériau multi-composite conforme à l'invention (Fig. 1) ;
- en coupe transversale, deux exemples (R-1 et R-2) de matériaux ou renforts multi-composites conformes à l'invention (Fig. 2) ;
- en coupe transversale, un autre exemple de monobrin (20) en CVR utilisable dans un matériau multi-composite conforme à l'invention (Fig. 3) ;
- en coupe transversale, un autre exemple (R-3) d'un matériau multi-composite conforme à l'invention (Fig. 4) ;
- le principe général de synthèse d'une benzoxazine à partir de trois composés, phénol, formaldéhyde et amine (R résidu de l'amine) et le mécanisme d'ouverture, par apport thermique, du cycle oxazine (« ring-opening ») d'une telle benzoxazine (Fig. 5) ;
- six exemples de monobenzoxazines de formule (A) avec différents exemples de radicaux R, de formules particulières (a-1) à (a-6) (Fig. 6);
- un schéma de synthèse général, à partir de trois composés, phénol, paraformaldéhyde et d'une diamine spécifique, d'une bis-benzoxazine de formule (B) (Monomère noté « M ») (Fig. 7) ;
- trois exemples de bis-benzoxazines de formule (B) ci-dessus avec différents groupements de liaison Z, de formules particulières (b-1) à (b-3) (Fig. 8) ;
- cinq exemples de bis-benzoxazines de formule (E) avec différents groupements de liaison Z, de formules particulières (e-1) à (e-5) (Fig. 9) ;
- deux exemples d'unités récurrentes de polybenzoxazines, de formules générales respectives (F-I) et (F-II) et de formules particulières (f-1) et (f-2) dans lesquelles Z représente à titre d'exemple un groupement phénylène (Fig. 10) ;
- en coupe transversale, un autre exemple (R-4) d'un matériau ou renfort multi-composite selon l'invention, consistant en un monobrin (10) en CVR pourvu d'une première couche (12) de benzoxazine, par exemple une couche fine adhésive, et d'une deuxième couche (14) d'une matière thermoplastique, par exemple polyester, à titre de couche de gainage périphérique (Fig. 11) ;
- en coupe transversale, un autre exemple (R-5) d'un matériau multi-composite conforme à l'invention, sous forme d'une bandelette de 3 monobrins en CVR parallèles qui sont collectivement enrobés par une couche (12) de benzoxazine (Fig. 12) ;
- en coupe transversale, un autre exemple (R-6) d'un renfort multi-composite conforme à l'invention, sous forme d'une bandelette de 3 renforts (R-4), collectivement gainés par une couche externe (14) d'une matière thermoplastique, par exemple polyester (Fig. 13) ;
- en coupe transversale, un exemple (30) de stratifié multicouches comportant un renfort (R-5), le tout enrobé par une matrice de caoutchouc (16) pour constituer un exemple de stratifié multicouches conforme à l'invention (Fig. 14) ;
- enfin, un dispositif pour la fabrication d'un monobrin (10) en CVR utilisable comme élément constitutif de base d'un matériau ou renfort multi-composite selon l'invention (Fig. 15).

### DESCRIPTION DETAILLEE DE L'INVENTION

Dans la présente demande, sauf indication expresse différente, tous les pourcentages (%) indiqués sont des pourcentages en masse.

Tout intervalle de valeurs désigné par l'expression « entre a et b » représente le domaine de valeurs allant de plus de « a » à moins de « b » (c'est-à-dire bornes « a » et « b » exclues) tandis que tout intervalle de valeurs désigné par l'expression « de a à b » signifie le domaine de valeurs allant de « a » jusqu'à « b » (c'est-à-dire incluant les bornes strictes « a » et « b »). L'expression « x et/ou y » utilisée pour décrire différentes variantes de réalisation, couvre trois variantes, « x » ou « y » ou « x et y ».

L'invention concerne donc (en référence par exemple aux figures 1 et 2) un matériau (R1, R2) du type multi-composite, en d'autres termes un composite de composite, utilisable notamment comme renfort pour le renforcement d'articles en caoutchouc tels que des bandages pour véhicules, qui a pour caractéristique essentielle de comporter au moins un (c'est-à-dire un ou plusieurs) monobrin (10) en composite verre-résine (en abrégé « CVR ») comportant des filaments de verre (101) noyés dans une résine polyester thermodurcie (102), caractérisé en ce que ledit monobrin est recouvert d'au moins une couche (12) de benzoxazine.

En d'autres termes, le matériau composite ou renfort de l'invention peut comporter un seul ou une pluralité de monobrins en CVR connus de l'art antérieur, avec, ce qui constitue la caractéristique essentielle de l'invention, au moins une couche de benzoxazine recouvrant individuellement le monobrin (chaque monobrin ou collectivement un paquet de plusieurs monobrins dans le cas de plusieurs monobrins).

La structure du matériau ou renfort multi-composite de l'invention va être décrite en détail ci-après.

Tout d'abord, le monobrin en CVR élémentaire constitutif du matériau multi-composite de l'invention peut prendre tout forme connue, il peut s'agir par exemple d'un monofilament cylindrique de diamètre important (par exemple supérieur à 100 µm, typiquement de quelques centaines de µm à quelques mm), c'est-à-dire de section droite essentiellement circulaire, ou encore d'un ruban élémentaire de section droite essentiellement rectangulaire (y compris carrée), étant entendu qu'au moins une couche de benzoxazine recouvre individuellement ledit monobrin ou chaque monobrin, pour constituer le matériau ou renfort multi-composite de l'invention.

La figure 1 représente en coupe transversale un monobrin en CVR (10) de départ pouvant servir à la fabrication d'un matériau multi-composite conforme à l'invention. Ce dernier, de diamètre D_{M}, du type filiforme c'est-à-dire de très grande longueur relativement à sa section, comporte de manière connue des filaments de verre unitaires (101) qui sont répartis de manière homogène dans tout le volume de résine polyester durcie (102).

Typiquement, les filaments de verre sont présents sous la forme d'une fibre multifilamentaire unique ou de plusieurs fibres multifilamentaires (si elles sont plusieurs, elles sont de préférence essentiellement unidirectionnelles), chacune d'entre elles pouvant comporter plusieurs dizaines, centaines voire milliers de filaments de verre unitaires (101). Ces filaments unitaires très fins ont généralement et de préférence un diamètre moyen de l'ordre de 5 à 30 µm, plus préférentiellement de 10 à 20 µm.

Par « résine polyester thermodurcie » ou « résine polyester , on entend dans la présente demande, de manière bien connue, une résine polyester se présentant sous une forme « durcie » donc polymérisée, quelle que soit la méthode de polymérisation utilisée (notamment par voie photochimique et/ou thermique), c'est-à-dire issue d'un polyester insaturé ; elle se présente sous forme d'un réseau de liaisons tridimensionnelles, dans un état irréversible propre aux polymères dits thermodurcissables (par opposition aux polymères dits thermoplastiques).

Il faut comprendre également qu'un tel terme englobe, bien entendu, une résine polyester en tant que telle (c'est-à-dire sans additif) et toute composition à base d'une (au moins une) résine polyester et comportant au moins un (c'est-à-dire un ou plusieurs) additif(s) comme par exemple des colorants, charges, plastifiants, solvants, agents réticulants, agents anti-vieillissement tels que antioxydants, antiozonants.

La figure 2 schématise quant à elle, en coupe transversale, deux exemples (R-1 et R-2) de matériaux multi-composites conformes à l'invention, dans lesquels un seul monobrin en CVR (10) tel que décrit précédemment, par exemple de diamètre D_{M} égal à 1 mm, a été recouvert par sa couche ou gaine (12) de résine benzoxazine, d'épaisseur minimale notée Eb (par exemple égale à environ 0,2 mm) au dos de chaque monobrin ; dans ces deux exemples, la section droite du matériau multi-composite est soit rectangulaire (ici essentiellement carrée) soit circulaire (respectivement renforts R-1 et R-2) ; elle pourrait bien entendu prendre diverses autres formes, par exemple une forme oblongue.

La figure 3 représente un autre exemple de monobrin en CVR (20) de départ pouvant servir à la fabrication d'un autre matériau ou renfort multi-composite conforme à l'invention. Cette figure illustre bien le problème précédemment décrit de défauts possibles apparaissant à la surface ou périphérie de certains monobrins en CVR (délamination, migration de certains filaments, propagation de fissures, etc.) se matérialisant par exemple ici par la migration en surface de filaments de verre (105) suite à des défauts possibles de fabrication, agressions externes telles que des fissurations susceptibles d'apparaître et se propager au stade même de la fabrication ou au cours des différentes étapes de mise en œuvre ultérieure de ces monobrins en CVR.

La figure 4 illustre l'intérêt de l'invention, avec en coupe transversale un exemple (R-3) de matériau multi-composite conforme à l'invention comportant le monobrin en CVR (20) précédent, pourvu d'une couche de benzoxazine à sa périphérie. Un avantage majeur de la couche de benzoxazine (12) est que cette dernière, une fois polymérisée, présente notamment un module en extension du même ordre de grandeur que celui de la résine polyester (102). Cette très bonne compatibilité entre les deux résines polyester et polybenzoxazine explique pourquoi le monobrin en CVR (20) tel que décrit précédemment, fragilisé par la migration en surface de filaments de verre (105) suite à une fissuration accidentelle par exemple, peut être aisément réparé, protégé par cette couche ou gaine (12) de benzoxazine.

Par « benzoxazine » ou « résine benzoxazine », on entend dans la présente demande tout composé, monomère, oligomère, polymère (homopolymère et/ou copolymère ; c'est-à-dire polybenzoxazine) de benzoxazine, ou tout mélange de ces produits, ainsi que toute composition monomérique ou polymérique comportant un tel composé, monomère, oligomère et/ou polymère, et au moins un additif ; à titre d'exemples additifs, on peut citer notamment des colorants, charges, plastifiants, solvants, agents réticulants, agents anti-vieillissement.

On rappellera tout d'abord que les benzoxazines sont des composés de formule générale (A) bien connue :

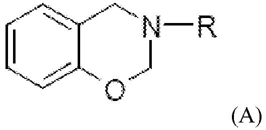

La figure 5 rappelle tout d'abord le principe général de synthèse d'une benzoxazine, ici à partir (réaction de condensation) d'une molécule de phénol, de deux molécules de formaldéhyde et d'une amine (R désignant le résidu de l'amine), avec élimination de deux molécules d'eau, puis le mécanisme d'ouverture (« ring-opening ») du cycle oxazine d'un tel composé lors d'un apport thermique (représenté par le symbole Δ), voire par voie photochimique.

De nombreux composés ou monomères benzoxazines peuvent être ainsi synthétisés en utilisant divers phénols et amines selon leurs types de substituants. Ces groupes substituants peuvent fournir ensuite des sites polymérisables et permettre la synthèse de divers polymères benzoxazine (ou polybenzoxazines).

Benzoxazines et polybenzoxazines qui en sont issues sont des produits aujourd'hui bien connus de l'homme du métier ; pour ne citer que quelques exemples de publication, on peut mentionner les articles « Polybenzoxazines - New high performance thermosetting resins : synthesis and properties » ; N.N. Ghosh et al., Prog. Polym. Sci. 32 (2007), 1344-1391, ou « Recent Advancement on Polybenzoxazine - A newly Developed High Performance Thermoset », Y. Yaggi et al., J. Polym. Sci. Part A: Polym. Chem. : Vol. 47 (2009), 5565-5576, ainsi que par exemple les brevets ou demandes de brevet US 5 543 516, WO 2013/148408.

On peut citer également, à titre d'exemples les demandes WO 2017/103375, WO 2017/103376, WO 2018/078227 et WO 2018/078228, déposées par la Demanderesse portant sur des benzoxazines et polybenzoxazines spécifiques qui ont été développées spécifiquement pour le revêtement de métal, en particulier comme primaires d'adhésion pour le collage de renforts métalliques du type « steel cords » à des caoutchoucs insaturés tels que des élastomères diéniques.

Toutefois, à la connaissance de la Demanderesse, les benzoxazines et/ou polybenzoxazines n'avaient jamais été décrites jusqu'ici comme pouvant servir de revêtement, qui plus est polyfonctionnel, à des monobrins en CVR.

Comme déjà connu expliqué en détail dans les différents documents cités ci-dessus, les polybenzoxazines ont la capacité remarquable, à haute température (par exemple, typiquement supérieure à 150°C voire à 200°C selon leur microstructure particulière), d'ouvrir leur cycles oxazine et de conduire ainsi à des structures de résines polyphénoliques thermodurcissables. Ceci leur confère une excellente stabilité thermique, sans transition de phase visible à des températures pouvant dépasser 200°C ; leur microstructure peut être largement adaptée pour permettre, très avantageusement, d'ajuster la flexibilité de la molécule et donc de la couche de revêtement visée, selon les applications particulières envisagées.

Selon un premier mode de réalisation préférentiel, la couche (12) de benzoxazine comporte au moins un (c'est-à-dire un ou plusieurs) composé (ou monomère) benzoxazine.

Ce composé benzoxazine peut comporter un seul cycle oxazine (cas d'une mono-oxazine), deux cycles oxazine (cas d'une bis-benzoxazine ou dibenzoxazine), voire plus de deux cycles oxazine, selon le nombre de groupements NH₂ sur l'amine de départ.

Cette benzoxazine peut en particulier être une monobenzoxazine simple, de formule très générale (A) : 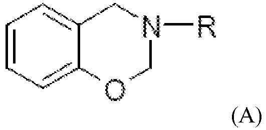 dans laquelle R (désignant pour rappel le résidu de l'amine de départ) représente un radical hydrocarboné pouvant comporter un hétéroatome (tel que par exemple S, O, N et P), notamment un alkyle (par exemple méthyle), cycloalkyle (par exemple hexyle) ou aryle (par exemple phényle) ; R pourrait également comporter, à titre d'exemple, des doubles ou triples liaisons insaturées.

Sur la figure 6 ont été reproduites six exemples de monobenzoxazines de formule (A) ci-dessus avec différents exemples de radicaux R, de formules particulières (a-1) à (a-6). On notera en particulier que celles de formules (a-4), (a-5) et (a-6) ont la capacité de polymériser à basse température, c'est-à-dire sans ouverture des cycles oxazine, grâce à la présence dans la molécule de doubles liaisons insaturées. Celles de formules (a-1), (a-2) et (a-3) nécessitent une ouverture des cycles oxazine pour pouvoir polymériser.

Selon une autre variante préférentielle, la benzoxazine est une bis-benzoxazine répondant à la formule (B): 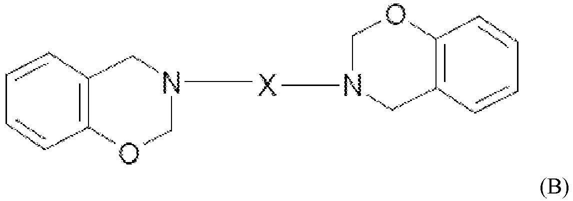 dans laquelle X représente un groupement de liaison au moins divalent, aliphatique, cycloaliphatique ou aromatique, comportant au moins un atome de carbone.

Dans la formule (B) ci-dessus, X représente un groupement de liaison (espaceur ou « spacer ») au moins divalent c'est-à-dire qu'il pourrait comporter plus de deux liaisons covalentes, par exemple trois ou quatre liaisons covalentes. De préférence, Z est divalent, c'est-à-dire ne comporte que deux liaisons covalentes.

Ce groupement X, pouvant être saturé ou insaturé, comporte par définition au moins un (c'est-à-dire un ou plusieurs) atome de carbone. Selon un mode de réalisation particulier de l'invention, X représente un groupement aliphatique comportant 1 à 20, plus préférentiellement 1 à 12 atomes de carbone, ou bien un groupement cycloaliphatique comportant 3 à 20, plus préférentiellement 3 à 12 atomes de carbone, ou bien un groupement aromatique comportant 6 à 30, plus préférentiellement 6 à 20 atomes de carbone.

La figure 7 rappelle le schéma de synthèse général, à partir de trois composés, phénol, paraformaldéhyde et d'une diamine spécifique, d'une bis-benzoxazine de formule (B) (Monomère noté « M »).

Sur la figure 8, ont été reproduites les formules particulières (b-1) à (b-3) de trois bis-benzoxazines de formule (B) ci-dessus avec différents groupements de liaison Z, ici à titre d'exemples du type aliphatique pouvant comporter un hétéroatome, ou (au moins en partie) aromatique.

Selon une autre variante préférentielle, la benzoxazine est une bis-benzoxazine répondant à la formule (C): 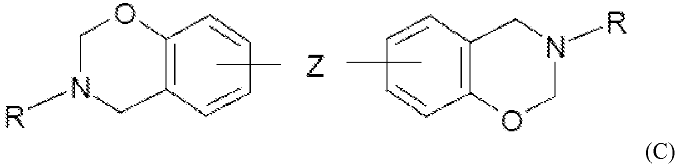 dans laquelle Z représente un groupement de liaison au moins divalent et les deux radicaux R, identiques ou différents, représentent un radical hydrocarboné pouvant comporter un hétéroatome (tel que par exemple O, S, N ou P).

Z peut être par exemple un radical comportant au moins un (c'est-à-dire un ou plusieurs) atome de carbone, saturé ou insaturé, tel que défini précédemment pour la formule (B) ci-dessus. Z peut représenter également un (au moins un) hétéroatome tel que par exemple O, S, N ou P (en particulier O ou S) directement relié à chaque noyau benzénique des deux cycles oxazine, comme illustré par exemple à la figure 9 qui suit dans les formules (e-3) et (e-4).

Les deux radicaux R, identiques ou différents, représentent un radical hydrocarboné tel que défini précédemment pour la formule (A) ci-dessus, pouvant comporter un hétéroatome (tel que par exemple S, O, N et P), notamment un alkyle (par exemple méthyle), cycloalkyle (par exemple hexyle) ou aryle (par exemple phényle), pouvant comporter un hétéroatome tel que par exemple S, O, N et P ou encore, à titre d'exemple, des doubles ou triples liaisons insaturées.

Selon une variante plus particulière, la bis-benzoxazine ci-dessus de formule générale (C) répond à la formule plus particulière (D) ci-dessous dans laquelle Z se trouve alors en position para de l'atome d'oxygène de chaque cycle oxazine :

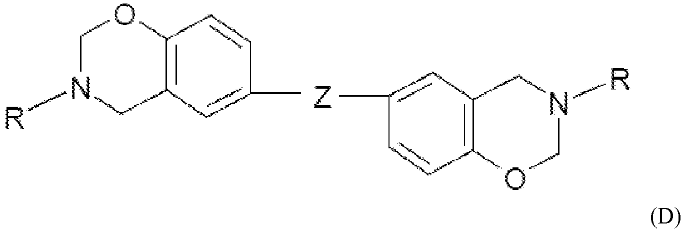

Plus particulièrement encore, la bis-benzoxazine de formule (D) ci-dessus répond à la formule plus particulière (E) ci-dessous (dans laquelle les deux radicaux R représentent un groupe phényle) :

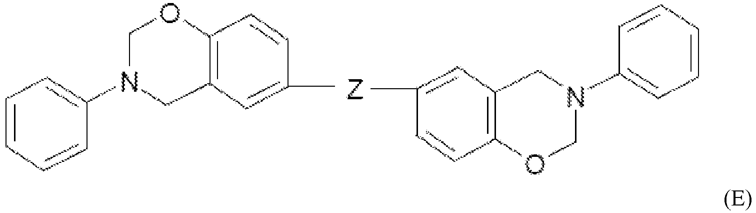

Sur la figure 9 ont été reproduites les formules particulières (e-1) à (e-5) de cinq bis-benzoxazines de formule (E) ci-dessus avec différents groupements de liaison Z, ici à titre d'exemples du type aliphatique, cycloaliphatique, ou encore sous forme d'un hétéroatome (O ou S). Tous ces composés sont bien connus de l'homme du métier et commercialement disponibles, par exemple auprès de la société Hunstman.

En résumé, selon un mode de réalisation préférentiel, la benzoxazine est une bis-benzoxazine répondant à au moins une des formules (B) ou (C) telles que décrites ci-dessus, la formule (C) étant plus particulièrement représentée par la formule (D), encore plus particulièrement par la formule (E).

Selon un deuxième mode de réalisation préférentiel, la couche (12) de benzoxazine comporte au moins un (c'est-à-dire un ou plusieurs) polymère benzoxazine (ou polybenzoxazine).

Selon une variante plus particulière, ce polymère benzoxazine est une polybenzoxazine dont les unités récurrentes comportent au moins un motif répondant à la formule (F-I) et/ou, après ouverture des cycles oxazine, répondant à la formule (F-II) ci-dessous : 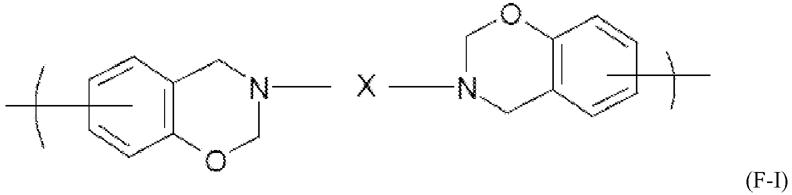 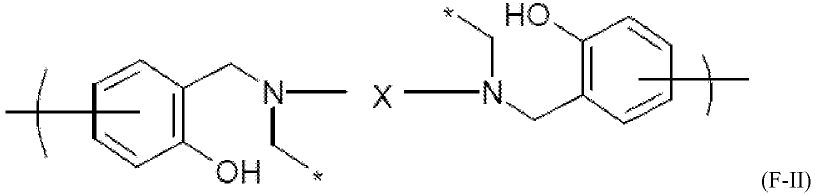 dans lesquelles X a la définition donnée supra pour les benzoxazines de formule (B), c'est-à-dire représente un groupement de liaison au moins divalent, aliphatique, cycloaliphatique ou aromatique, comportant au moins un (c'est-à-dire un ou plusieurs) atome de carbone et pouvant comporter un hétéroatome (tel que par exemple S, O, N ou P), ou encore, à titre d'autre exemple, des doubles ou triples liaisons insaturées.

Par polybenzoxazine doit être entendu ici tout homopolymère ou copolymère, notamment copolymère à blocs, de benzoxazine avec des unités structurelles récurrentes qui comportent au moins un motif de formule (F-I) ou (F-II) ci-dessus ; la polybenzoxazine peut bien entendu comporter à la fois des motifs de formule (F-I) et des motifs de formule (F-II). Cette définition (mélange possible d'unités récurrentes avec cycles oxazine fermés et d'unités récurrentes avec cycles oxazine ouverts) s'applique à toutes les polybenzoxazines décrites dans la présente demande, quelles que soient les unités structurelles récurrentes concernées, notamment celles de formules (G) et (H) ci-après.

Dans la formule (F-II) ci-dessus et dans toute la présente demande, l'homme du métier comprendra immédiatement que les deux symboles « ^{∗} » (identiques ou différents) représentent un rattachement quelconque du motif à un atome de carbone ou à un hétéroatome (choisi de préférence parmi O, S, N et P), rattachement ou liaison résultant de l'ouverture des cycles oxazine.

L'homme du métier comprendra aisément qu'une telle polybenzoxazine de formule (F-I) et/ou (F-II) peut être issue notamment d'une bis-benzoxazine répondant à la formule (B) décrite précédemment.

Sur la figure 10 annexée, ont été reproduites les formules particulières (f-1) et (f-2) des unités récurrentes de deux polybenzoxazines de formules générales respectives (F-I) et (F-II) ci-dessus, Z représentant ici un groupement phénylène.

Selon une autre variante particulière, ce polymère benzoxazine est une polybenzoxazine dont les unités récurrentes comportent au moins un motif répondant à la formule (G-I) et/ou, après ouverture des cycles oxazine, à la formule (G-II) ci-dessous : 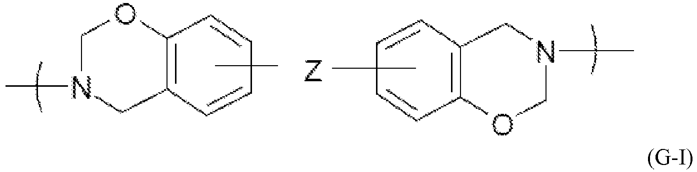 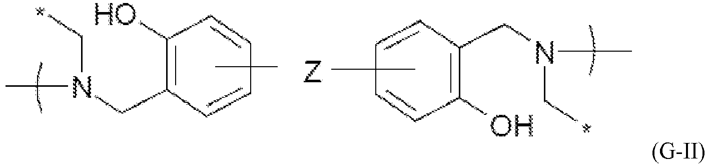 dans lesquelles Z représente un groupement de liaison au moins divalent dont la définition a déjà été donnée pour la formule (C) précédente.

Z peut être par exemple un radical comportant au moins un (c'est-à-dire un ou plusieurs) atome de carbone, en particulier un groupement hydrocarboné, aliphatique, cycloaliphatique ou aromatique, pouvant comporter un hétéroatome tel que par exemple S, O, N ou P, ou encore, à titre d'exemple, des doubles ou triples liaisons insaturées. Z peut représenter également un (au moins un) hétéroatome tel que par exemple O, S, N ou P (en particulier O ou S) directement relié à chaque noyau benzénique des deux cycles oxazine.

On comprendra aisément qu'une telle polybenzoxazine peut être issue notamment d'une bis-benzoxazine répondant à la formule (C) décrite supra.

Plus particulièrement encore, le polymère benzoxazine est une polybenzoxazine dont les unités récurrentes de formule (G) ci-dessus répondent à la formule (H-I) et/ou, après ouverture des cycles oxazine, à la formule (H-II) ci-dessous dans laquelle Z se trouve en position para de l'oxygène de chaque cycle oxazine:

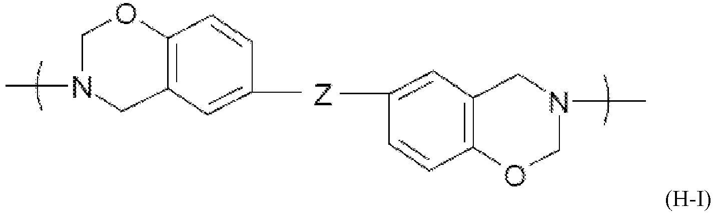

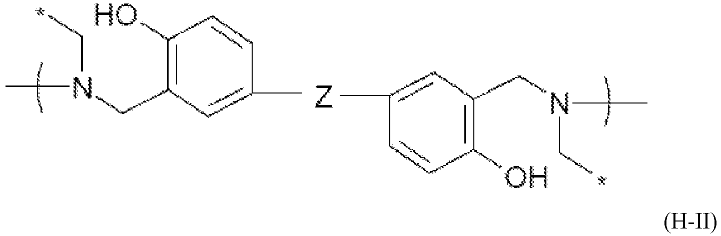

On comprendra aisément qu'une telle polybenzoxazine peut être issue notamment d'une bis-benzoxazine répondant à la formule (D) décrite supra.

Dans chacune des formules (A), (B), (C), (D), (E), (F-I), (F-II), (G-I), (G-II), (H-I) et (H-II) décrites ci-dessus, un ou plusieurs atomes d'hydrogène d'au moins un ou de chaque noyau benzénique des deux cycles oxazine, ou de tout autre noyau benzénique éventuel (par exemple un groupe phénylène central) présent sur la molécule de benzoxazine et/ou polybenzoxazine, peuvent être éventuellement substitués, par exemple en ce qui concerne les monomères benzoxazines par des groupes fonctionnels susceptibles de favoriser par exemple leur homopolymérisation à basse température (c'est-à-dire sans ouverture des cycles oxazine), par exemple en ce qui concerne les polybenzoxazines par des groupes fonctionnels susceptibles de favoriser par exemple l'adhésion du polymère au CVR, voire à une autre matrice dans le cas notamment où la couche (12) de benzoxazine constitue une couche adhésive intermédiaire entre le CVR d'une part et une autre matière environnante, par exemple du caoutchouc ou une matière thermoplastique.

A titre de résine polyester, on utilise de préférence une résine vinylester, plus préférentiellement du type époxyvinylester.

On utilise encore plus préférentiellement une résine vinylester, notamment du type époxyde, qui au moins pour partie est à base (c'est-à-dire greffée sur une structure du type) novolaque (encore appelée phénoplaste) et/ou bisphénolique, soit préférentiellement une résine vinylester à base novolaque, bisphénolique, ou novolaque et bisphénolique.

Une résine époxyvinylester à base novolaque (partie entre crochets dans la formule I ci-dessous) répond par exemple, de manière connue, à la formule (I) qui suit :

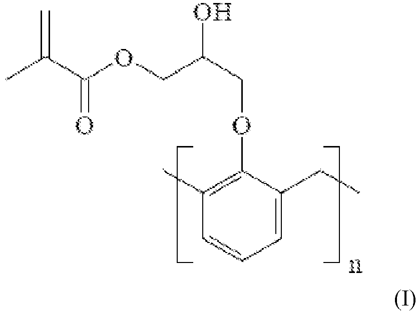

Une résine époxyvinylester à base bisphénolique A (partie entre crochets de la formule (II) ci-dessous) répond par exemple à la formule (le "A" rappelant que le produit est fabriqué à l'aide d'acétone):

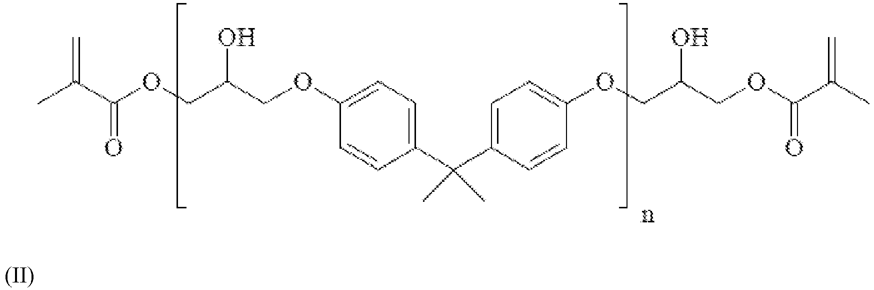

Une résine époxyvinylester de type novolaque et bisphénolique a montré d'excellents résultats. A titre d'exemple d'une telle résine, on peut citer notamment les résines vinylester « ATLAC 590 » et « E-Nova FW 2045 » de la société DSM (diluées avec environ 40% de styrène) décrites dans les demandes EP-A-1 074 369 et EP-A-1 174 250 précitées. Des résines époxyvinylester sont disponibles auprès d'autres fabricants tels que par exemple AOC (USA - résines « VIPEL »).

Les monobrins en CVR élémentaires de départ, constitutifs du matériau ou renfort multi-composite de l'invention, sont bien connus ; ils peuvent être fabriqués, et ceci de manière préférentielle, selon des procédés connus décrits dans les demandes précitées WO 2015/014578, WO 2015/014579, WO 2015/090973, WO 2015/165777, WO 2016/116457, WO 2016/189209 et WO 2016/189126.

Pour rappel, de tels procédés comportent au moins les étapes suivantes :
- réaliser un arrangement rectiligne de fibres (filaments) de verre et entraîner cet arrangement dans une direction d'avancement :
- dans une chambre à vide, dégazer l'arrangement de fibres par l'action du vide ;
- en sortie de la chambre à vide, après dégazage, traverser une chambre d'imprégnation sous vide de manière à imprégner ledit arrangement de fibres par une résine (ou composition de résine) polyester thermodurcissable, à l'état liquide, pour obtenir un imprégné contenant les filaments de verre et la résine ;
- faire passer ledit imprégné au travers d'une filière de calibrage ayant une section de surface et de forme prédéfinies, pour lui imposer une forme de monobrin (par exemple un monofilament de section droite ronde ou un ruban de section droite rectangulaire) ;
- en aval de la filière, dans une chambre d'irradiation UV, polymériser la résine sous l'action des UV ;
- puis enrouler pour stockage intermédiaire le monobrin ainsi obtenu.

Toutes les étapes ci-dessus (arrangement, dégazage, imprégnation, calibrage, polymérisation et enroulage final) sont des étapes bien connues de l'homme du métier, ainsi que les matières (fibres multifilamentaires et compositions de résine) utilisées ; elles ont été décrites en détail dans les demandes internationales citées précédemment.

On rappellera notamment qu'avant toute imprégnation des fibres, est conduite préférentiellement une étape de dégazage de l'arrangement de fibres par l'action du vide, afin notamment de renforcer l'efficacité de l'imprégnation ultérieure et surtout de garantir l'absence de bulles à l'intérieur du monobrin composite final. Après traversée de la chambre à vide, les filaments de verre entrent dans une chambre d'imprégnation qui est totalement pleine de résine d'imprégnation, donc dépourvue d'air : c'est en ce sens qu'on peut qualifier cette étape d'imprégnation d'« imprégnation sous vide ».

Comme déjà indiqué, la résine polyester (ou composition de résine) de départ utilisée est par définition une résine réticulable (i.e., durcissable) susceptible d'être réticulée, durcie par toute méthode connue, par exemple par voie photochimique ou encore par un rayonnement UV (ou UV-visible), de préférence émettant dans un spectre allant au moins de 300 nm à 450 nm.

Cette résine d'imprégnation comporte de préférence un photo-initiateur sensible (réactif) aux UV au-delà de 300 nm, de préférence entre 300 et 450 nm. Ce photo-initiateur, de préférence de la famille des composés phosphine, est utilisé à un taux préférentiel de 0,5 à 3%, plus préférentiellement de 1 à 2,5%. Elle peut également comporter un agent de réticulation, par exemple à un taux compris entre 5% et 15% (% en poids de composition d'imprégnation).

La filière dite de calibrage permet, grâce à une section droite de dimensions déterminées, généralement et de préférence circulaire ou rectangulaire (y compris carrée), voire oblongue, d'ajuster la proportion de résine par rapport aux fibres de verre tout en imposant à l'imprégné la forme et l'épaisseur visées pour le monobrin.

La chambre de polymérisation ou d'irradiation UV a ensuite pour fonction de polymériser, réticuler la résine sous l'action des UV. Elle comporte un ou de préférence plusieurs irradiateurs UV, constitué(s) par exemple chacun par une lampe UV de longueur d'onde de 200 à 600 nm.

Le monobrin en CVR final ainsi formé à travers la chambre d'irradiation UV, dans lequel la résine est maintenant à l'état solide, est ensuite récolté par exemple sur une bobine de réception sur laquelle il peut être enroulé sur une très grande longueur.

On obtient finalement un bloc composite terminé de fabrication tel que schématisé par exemple sur la figure 1, sous la forme d'un monobrin en CVR continu (10) de diamètre D_{M}, de très grande longueur relativement à sa section (définition d'un « renfort »), dont les filaments de verre unitaires (101) sont répartis de manière homogène dans tout le volume de résine polyester durcie (102).

Préférentiellement, le taux pondéral de fibres de verre dans ce monobrin en CVR est compris entre 60 et 80%, de préférence entre 65 et 75%. Ce taux pondéral est calculé en faisant le rapport du titre de la fibre de verre initiale sur le titre du monobrin en CVR. Le titre (ou densité linéique) est déterminé sur au moins trois échantillons, chacun correspondant à une longueur de 50 m, par pesée de cette longueur ; le titre est donné en tex (poids en grammes de 1000 m de produit - pour rappel, 0, 111 tex équivaut à 1 denier).

De préférence, la densité (ou masse volumique) de ce monobrin en CVR est comprise entre 1,8 et 2,1. Elle est mesurée (à 23°C) à l'aide d'une balance spécialisée de la société Mettler Toledo de type « PG503 DeltaRange » ; les échantillons, de quelques cm, sont successivement pesés dans l'air et plongés dans de l'éthanol ; le logiciel de l'appareil détermine ensuite la densité moyenne sur trois mesures.

La température de transition vitreuse de la résine polyester thermodurcie est de préférence supérieure à 150°C, plus préférentiellement supérieure à 170°C, en particulier supérieure à 190°C ; son module initial en extension, mesuré à 23°C, est supérieur à 3,0 GPa, plus préférentiellement supérieur à 3,5 GPa.

Les températures de transition vitreuse (Tg) sont mesurées de manière connue par DSC (Differential Scanning Calorimetry), au second passage, par exemple et sauf indications différentes spécifiées dans la présente demande, selon la norme ASTM D3418 de 1999 (appareil DSC "822-2" de Mettler Toledo ; atmosphère azote ; échantillons préalablement portés de la température ambiante (20°C) à 250°C (10°C/min), puis refroidis rapidement jusqu'à 20°C, avant enregistrement final de la courbe de DSC de 20°C à 250°C, selon une rampe de 10°C/min).

Une fois le monobrin (10) en CVR ainsi terminé, ce dernier est gainé, revêtu de sa couche de benzoxazine (12), par toute méthode d'imprégnation connue de l'homme du métier adaptée au cas particulier mis en œuvre (pulvérisation, application au pinceau, passage à travers un bain ou une filière pour ne citer que quelques exemples) dans laquelle la résine ou composition de résine benzoxazine de départ est sous une forme liquide. On procède de préférence par passage du monobrin, voire le cas échéant de plusieurs monobrins en CVR disposés parallèlement, à travers un bain d'imprégnation contenant la résine (ou composition de résine) benzoxazine sous forme liquide, puis si nécessaire essorage par exemple à travers une filière de calibrage telle que décrite précédemment pour la fabrication du monobrin lui-même. Une étape de traitement thermique pour polymérisation, au moins partielle, de la résine (et si besoin séchage) est enfin conduite pour l'obtention du matériau ou renfort multi-composite de l'invention.

Pour l'étape d'imprégnation ci-dessus, la résine ou composition de résine benzoxazine est mise préalablement sous forme liquide par toute méthode appropriée, par exemple par mise en solution dans un solvant (ou mélange de solvants) organique tel que par exemple acétone, cyclohexane ou toluène, et/ou par voie thermique à une température typiquement supérieure à 100°C, de préférence comprise entre 100 et 150°C, en particulier et avantageusement en présence d'un plastifiant tel que ATBN (« amine-terminated butadiene acrylonitrile »), PEG (polyéthylène glycol), PPG (polypropylène glycol) favorisant l'imprégnation par un abaissement de la viscosité. Préférentiellement, la solution liquide de résine benzoxazine comporte au moins un solvant organique et/ou un plastifiant.

Après imprégnation (et au besoin essorage), les conditions (température et durée) de traitement thermique (y compris séchage éventuel en présence d'un solvant) pour polymérisation, au moins partielle, de la résine ou composition de résine seront bien entendu adaptées aux cas particuliers de mise en œuvre de l'invention, étant entendu que ces conditions vont dépendre de très nombreux facteurs : nature de la benzoxazine (ou composition de benzoxazine), présence ou non de catalyseurs de polymérisation, mode de polymérisation utilisé (voie thermique, photochimie, radiation), épaisseur de la couche de benzoxazine visée, application ultérieure visée pour l'objet de l'invention. La température de polymérisation, au moins partielle, de la résine benzoxazine est préférentiellement supérieure à 100°C, plus préférentiellement supérieure à 150°C.

La polymérisation de la benzoxazine pourra être conduite de manière complète par exemple dans le cas où le matériau multi-composite de l'invention ainsi préparé sera terminé de fabrication, c'est-à-dire utilisable industriellement tel quel, avec à sa périphérie, sa couche finale de benzoxazine, utilisée par exemple à titre de couche épaisse de gainage ou de protection.

Ainsi, selon un mode de réalisation préférentiel, dans le cas par exemple d'une couche (relativement) épaisse, l'épaisseur minimale (Eb) de la couche de benzoxazine recouvrant le (ou chaque) monobrin en CVR est comprise dans un domaine de 0,05 à 1,0 mm, de préférence entre 0,1 et 0,5 mm.

Au contraire, seule une pré-polymérisation (c'est-à-dire polymérisation partielle) de la benzoxazine sera avantageusement conduite dans le cas où le matériau ou renfort multi-composite ainsi préparé n'est pas terminé de fabrication, mais destiné à être transformé dans une étape ultérieure, comme par exemple pour l'obtention d'une couche adhésive (plus fine) de benzoxazine destinée à entrer ultérieurement au contact d'une autre matrice de polymère, par exemple du caoutchouc ou une matière thermoplastique.

Ainsi, selon un mode de réalisation préférentiel, dans le cas par exemple d'une couche adhésive (relativement) mince, l'épaisseur minimale (Eb) de la couche de benzoxazine recouvrant le (ou chaque) monobrin en CVR est comprise entre 0,5 et 50 µm, de préférence entre 1 et 10 µm.

La figure 11 schématise, en coupe transversale, un exemple (R-4) d'un matériau ou renfort multi-composite conforme à l'invention dans lequel la couche de benzoxazine (12) n'est pas située à la périphérie du renfort comme précédemment, mais utilisée comme couche intermédiaire, en particulier comme couche adhésive, entre d'une part le monobrin en CVR (10) et d'autre part une couche (14) d'un autre matériau polymérique destiné à être disposé à la périphérie du matériau ou renfort.

Selon un mode de réalisation particulier de l'invention, cette deuxième couche (14) comporte une matière thermoplastique, en particulier un polyester (ou composition de polyester) tel que décrit dans les demandes WO 2015/090973, WO 2015/165777, WO 2016/116457, WO 2016/189209 et WO 2016/189126 citées en introduction du présent mémoire.

Pour le dépôt de cette matière thermoplastique, notamment polyester, on pourra procéder comme indiqué par exemple dans les demandes internationales ci-dessus, et décrit ci-après.

Une fois le monobrin en CVR (10) revêtu de sa couche (12) de benzoxazine pour l'obtention du renfort multi-composite selon l'invention (par exemple R-2), le tout peut être recouvert, gainé de manière connue de la couche de matière thermoplastique (14), par exemple par passage du monobrin, voire le cas échéant de plusieurs renforts (R-2) disposés parallèlement, à travers une tête d'extrusion appropriée délivrant la matière thermoplastique à l'état fondu.

Cette étape de gainage consiste par exemple simplement à faire passer le ou chaque renfort (R-2) (monobrin CVR déjà revêtu de benzoxazine) à travers une ou des filières de diamètre adapté, dans des têtes d'extrusion chauffées à des températures appropriées, ou encore dans un bain d'enduction contenant la matière thermoplastique mise préalablement en solution dans un solvant (ou mélange de solvants) organique approprié.

En sortie de chaque tête d'extrusion, le ou les brins (R-2) ainsi gainés sont ensuite refroidis suffisamment de manière à solidifier la couche de matière thermoplastique, par exemple avec de l'air ou un autre gaz froid, ou par passage dans un bain d'eau suivi d'une étape de séchage.

Après refroidissement, le monobrin ainsi gainé (R-1, R-2) est optionnellement traité thermiquement pour polymériser totalement la résine benzoxazine au contact de la matière thermoplastique. La température de polymérisation totale est préférentiellement supérieure à 150°C, plus préférentiellement supérieure à 200°C, encore plus préférentiellement supérieure à 250°C.

A titre d'exemple, le recouvrement d'un renfort (R-2) en CVR revêtu de sa couche de adhésive de benzoxazine (épaisseur Eb de quelques µm ou quelques dizaines de µm), de diamètre proche de 1 mm par une couche de polyester (par exemple PET ou PBT) d'épaisseur minimale Et égale à environ 0,2 mm, pour l'obtention d'un renfort multi-composite final (R-4) ayant un diamètre total d'environ 1,4 mm, est réalisé sur une ligne d'extrusion-gainage comportant deux filières, une première filière (contre-filière ou filière amont) de diamètre égal à environ 1,05 mm et une seconde filière (ou filière aval) de diamètre égal à environ 1,45 mm, disposées toutes deux dans une tête d'extrusion portée à environ 290°C. Le polyester, fondu à une température de 280°C dans l'extrudeuse, recouvre ainsi le renfort (R-2), par le biais de la tête de gainage, à une vitesse de défilement du fil égale typiquement à plusieurs dizaines de m/min, pour un débit de pompe d'extrusion typiquement de plusieurs dizaines de cm3/min. En sortie de ce gainage, le fil peut être immergé dans un bac de refroidissement rempli d'eau froide, pour solidifier et figer le polyester dans son état amorphe, puis séché par exemple en ligne par une buse d'air, ou par passage de la bobine de réception à l'étuve.

De préférence, la couche ou gaine (14) est constituée par une matière thermoplastique dont la température de transition vitreuse est supérieure à 20°C, de préférence supérieure à 50°C, plus préférentiellement supérieure à 70°C. D'autre part, la température de fusion (Tf) de cette matière thermoplastique est de préférence supérieure à 150°C, plus préférentiellement supérieure à 200°C. Préférentiellement, l'épaisseur minimale (notée Et) de la couche de matière thermoplastique recouvrant le ou chaque monobrin est comprise entre 0,05 et 0,5 mm, plus préférentiellement entre 0,1 et 0,4 mm, en particulier entre 0,1 et 0,3 mm.

Préférentiellement, le module initial en extension de cette couche de matière thermoplastique (14) est compris entre 500 et 2500 MPa, de préférence entre 500 et 1500 MPa ; son allongement élastique est de préférence supérieur à 5%, plus préférentiellement supérieur à 8%, en particulier supérieur à 10% ; son allongement à la rupture est de préférence supérieur à 10%, plus préférentiellement à 15%, en particulier supérieur à 20%.

Préférentiellement, la matière thermoplastique est un polymère ou une composition polymérique (composition à base d'au moins un polymère et d'au moins un additif).

Ce polymère thermoplastique est plus préférentiellement un polyester ou un mélange de polyesters ; parmi les polyesters préférentiels, on peut citer ceux choisis dans le groupe constitué par les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate), et les mélanges de tels polyesters.

Au polymère ou mélange de polymères ci-dessus, peuvent être éventuellement ajoutés, pour constituer une composition polymérique, divers additifs tels que colorant, charge, plastifiant, antioxydant ou autre stabilisant.

Grâce à la présence combinée de ses filaments de verre, de la matrice polyester, de la couche (12) de benzoxazine voire de la gaine (14) thermoplastique externe remplissant ici une fonction de frettage, le matériau ou renfort multi-composite de l'invention (R-4) se caractérise par une cohésion transversale améliorée, une haute stabilité dimensionnelle, mécanique et thermique.

Dans le cas où plusieurs renforts en CVR (R-4) sont utilisés, la couche ou gaine thermoplastique (14) peut être déposée individuellement sur chacun des renforts, ou bien déposée collectivement sur plusieurs des renforts disposés de manière appropriée, par exemple alignés selon une direction principale. En d'autres termes, dans le cas de plusieurs monobrins, la deuxième couche (14) peut elle-même recouvrir individuellement chaque monobrin revêtu de de sa couche (12) de benzoxazine, ou collectivement un paquet de plusieurs monobrins revêtus (individuellement ou collectivement) de leur couche (12) de benzoxazine.

Le caractère thermoplastique et donc thermofusible de la matière (14) recouvrant chaque renfort (R-4) en CVR, permet très avantageusement de fabriquer par collage thermique une grande variété de renforts multi-composites à plusieurs brins (renforts), ayant différentes formes et sections droites, ceci par fusion au moins partielle de la matière de recouvrement (14), puis refroidissement de l'ensemble des renforts (R-4) gainés de matière thermoplastique (14) une fois ces derniers disposés ensemble, agencés de manière appropriée. Cette fusion au moins partielle sera conduite à une température préférentiellement comprise entre la température de fusion Tf de la matière thermoplastique (14) et la température de transition vitreuse de la résine polyester thermodurcie (102).

De préférence, le matériau ou renfort multi-composite de l'invention tel que décrit précédemment, terminé de fabrication, présente un allongement à la rupture supérieur à 3,0%, plus préférentiellement supérieur à 3,5% ; dans ce matériau ou renfort, le module initial en extension du ou de chaque monobrin en CVR est de préférence supérieur à 30 GPa, plus préférentiellement supérieur à 33 GPa.

Les propriétés mécaniques en extension ci-dessus sont mesurées à l'aide d'une machine de traction « INSTRON » du type 4466 (logiciel BLUEHILL-2 fourni avec la machine de traction), selon la norme ASTM D 638, sur des matériaux multi-composites ou des monobrins en CVR bruts de fabrication c'est-à-dire non encollés, ou bien encollés (c'est-à-dire prêts à l'emploi), ou encore extraits du produit semi-fini ou de l'article en caoutchouc qu'ils renforcent. Avant mesure, ces matériaux multi-composites ou ces monobrins en CVR sont soumis à un conditionnement préalable (stockage pendant au moins 24 heures dans une atmosphère standard selon la norme européenne DIN EN 20139 (température de 23 ± 2°C ; hygrométrie de 50 ± 5 %). Les échantillons testés subissent une traction sur une longueur initiale de 400 mm à une vitesse nominale de 100 m/min, sous une prétension standard de 0,5 cN/tex. Tous les résultats donnés sont une moyenne de 10 mesures.

De préférence, le diamètre D_{R} est compris entre 0,3 et 50 mm, plus préférentiellement compris dans un domaine de 0,5 à 30 mm, selon le type d'application visée.

Ainsi, selon un mode de réalisation particulier, notamment lorsqu'il est destiné à renforcer un stratifié multicouches tel que décrit ultérieurement, le diamètre D_{R} de ce matériau ou renfort conforme à l'invention est de préférence compris entre 0,3 et 3,0 mm, plus préférentiellement entre 0,4 et 2,5 mm, en particulier entre 0,5 et 2,2 mm. Selon d'autres applications particulières possibles, le diamètre D_{R} pourrait bien entendu être nettement supérieur, par exemple compris entre 3 et 50 mm, notamment dans un domaine de 5 à 30 mm.

Cette définition de « diamètre » couvre aussi bien des objets multi-composites de forme essentiellement cylindrique (à section droite circulaire) que des objets multi-composites de formes différentes, par exemple de forme oblongue (plus ou moins aplatie) ou de section droite rectangulaire (y compris carrée). Dans le cas d'une section droite non circulaire, comme schématisé par exemple à la figure 2 (renfort R-1), D_{R} est par convention l'épaisseur du matériau ou renfort multi-composite ; Eb et Et sont dans ce cas les épaisseurs minimales mesurées « au dos » du monobrin, c'est-à-dire au point le plus étroit ou le moins épais, comme schématisé aux figures 2, 4, 11, 12 et 13.

Comme déjà dit précédemment, le matériau composite ou renfort de l'invention peut comporter un seul ou une pluralité de monobrins en CVR, au moins une couche de benzoxazine recouvrant individuellement le monobrin, chaque monobrin ou collectivement un paquet de plusieurs monobrins.

Ainsi, la figure 12 représente, en coupe transversale, un autre exemple (R-5) d'un renfort multi-composite conforme à l'invention, ici de section droite rectangulaire, plus précisément sous la forme d'une bandelette comportant 3 monobrins en CVR parallèles qui sont collectivement enrobés, gainés par une couche (12) de benzoxazine d'épaisseur minimale Eb au dos de chaque monobrin (10).

La figure 13 représente quant à elle, toujours en coupe transversale, un autre exemple (R-6) d'un renfort multi-composite conforme à l'invention, aussi de section droite rectangulaire, se présentant cette fois sous la forme d'une bandelette comportant 3 renforts (R-2) tels que décrits précédemment à la figure 11, chacun constitué par un monobrin (10) en CVR revêtu individuellement de benzoxazine (12), l'ensemble (c'est-à-dire les 3 monobrins ainsi revêtus de benzoxazine) étant collectivement recouvert, gainé par une couche finale externe (14) d'une matière thermoplastique polyester d'épaisseur minimale Et au dos de chaque renfort (R-2).

L'invention concerne également un stratifié multicouches comportant au moins un matériau ou renfort multi-composite selon l'invention tel que précédemment décrit, disposé entre et au contact de deux couches de composition de caoutchouc ou élastomère, notamment diénique.

Dans la présente demande, on entend de manière connue, par :
- "stratifié" ou "stratifié multicouches", au sens de la classification internationale des brevets : tout produit comportant au moins deux couches, de forme plane ou non plane, qui sont au contact l'une de l'autre, ces dernières pouvant être ou non liées, connectées entre elles ; l'expression "lié" ou "connecté" doit être interprétée de façon extensive de manière à inclure tous les moyens de liaison ou d'assemblage, en particulier par collage ;
- caoutchouc "diénique" : tout élastomère (élastomère seul ou mélange d'élastomères) qui est issu, au moins en partie (i.e., un homopolymère ou un copolymère), de monomères diènes c'est-à-dire de monomères porteurs de deux doubles liaisons carbone-carbone, que ces dernières soient conjuguées ou non.

La figure 14 représente un exemple d'un tel stratifié multicouches (30) comportant un renfort multi-composite (R-5 tel que décrit à la fig. 12), constitué de trois monobrins en CVR (10a, 10b, 10c) (tels que schématisés à la fig. 1) gainés par une couche de benzoxazine (12), ce renfort selon l'invention R-5 étant lui-même enrobé au final par une gaine de caoutchouc (16), notamment diénique, pour constituer un stratifié multicouches conforme à l'invention.

A titre d'autre exemple, le stratifié multicouches de l'invention pourrait comporter un renfort (R-6) tel que décrit précédemment à la figure 13, avec une pluralité de monobrins en CVR revêtus de deux couches de polymère différentes et non d'une seule, une première couche intermédiaire de benzoxazine (12) par exemple à titre de couche adhésive, et une couche externe (14) de matière thermoplastique par exemple en polyester, le tout étant enrobé au final par une gaine de caoutchouc (16).

Ce stratifié multicouches léger et performant, insensible à la corrosion, permet notamment de remplacer avantageusement les nappes conventionnelles renforcées de câbles d'acier utilisées dans les bandages pneumatiques.

Chaque couche de composition de caoutchouc, ou ci-après "couche de caoutchouc", constitutive du stratifié multicouches est à base d'au moins un élastomère, de préférence du type diénique choisi par exemple dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères. La couche de caoutchouc peut comporter également tout ou partie des additifs habituellement utilisés dans les matrices de caoutchouc destinées à la fabrication de pneumatiques, tels que par exemple des charges renforçantes comme le noir de carbone ou la silice, des agents de couplage, des agents anti-vieillissement, des antioxydants, des agents plastifiants ou des huiles d'extension, des résines tackifiantes, des agents antiréversion, un système de réticulation ou de vulcanisation.

Pour faire adhérer le caoutchouc à la couche (12) de benzoxazine, voire optionnellement à la couche (14) de polyester thermoplastique, on pourra utiliser tout système adhésif approprié, par exemple une colle textile du type "RFL" (résorcinol-formaldéhyde-latex) comportant au moins un élastomère diénique tel que du caoutchouc naturel, ou toute colle équivalente connue pour conférer une adhésion satisfaisante entre du caoutchouc et des fibres textiles conventionnelles. A titre d'exemple, le procédé d'encollage peut comporter essentiellement les étapes successives suivantes : passage dans un bain de colle, suivi d'un essorage (par exemple par soufflage, calibrage) pour éliminer l'excès de colle ; puis séchage par exemple par passage dans un four ou tunnel chauffant (par exemple pendant 30 s à 180°C) et enfin traitement thermique (par exemple pendant 30 s à 230°C).

L'homme du métier comprendra aisément que la connexion entre d'une part la couche de benzoxazine (12) voire de polyester thermoplastique (14), et d'autre part chaque couche de caoutchouc avec laquelle elle est au contact dans le stratifié multicouches de l'invention, est assurée définitivement lors de la cuisson (réticulation) finale de l'article en caoutchouc, notamment bandage, auquel se destine le stratifié.

### EXEMPLES DE REALISATION DE L'INVENTION

On décrit ci-après des exemples de fabrication de monobrins en CVR, de renforts multi-composites et de stratifiés multicouches selon l'invention à base de ces monobrins en CVR.

La figure 15 schématise très simplement un exemple d'un dispositif 100 permettant la production de monobrins en CVR (10) tels que représentés à la figure 1.

On y voit une bobine 110 contenant, dans l'exemple illustré, des fibres de verre 111 (sous forme de multifilaments). La bobine est déroulée en continu par entraînement, de manière à réaliser un arrangement rectiligne 112 de ces fibres 111. En général, les fibres de renforcement sont livrées en "rovings", c'est à dire déjà en groupes de fibres enroulées en parallèle sur une bobine ; par exemple, on utilise des fibres commercialisées par Owens Corning sous la désignation de fibre "Advantex", de titre égal à 1200 tex (pour rappel, 1 tex correspond à 1 g/1000 m de fibre). C'est par exemple la traction exercée par la réception tournante 126 qui va permettre l'avancement des fibres en parallèle et du monobrin en CVR tout le long de l'installation 100.

Cet arrangement 112 traverse ensuite une chambre à vide 113 (reliée à une pompe à vide non représentée), disposée entre une tubulure d'entrée 113a et une tubulure de sortie 113b débouchant sur une chambre d'imprégnation 114, les deux tubulures de préférence à paroi rigide ayant par exemple une section minimale supérieure (typiquement deux fois plus) à la section totale de fibres et une longueur très supérieure (typiquement 50 fois plus) à ladite section minimale.

Comme déjà enseigné par les demandes citées en introduction du présent mémoire, l'utilisation de tubulures à paroi rigide, aussi bien pour l'orifice d'entrée dans la chambre à vide que pour l'orifice de sortie de la chambre à vide et le transfert depuis la chambre à vide jusqu'à la chambre d'imprégnation, s'avère compatible à la fois avec des cadences élevées de passage des fibres au travers des orifices sans rompre les fibres, mais aussi permet d'assurer une étanchéité suffisante. Il suffit, au besoin expérimentalement, de rechercher la plus grande section de passage, compte tenu de la section totale des fibres à traiter, permettant encore d'offrir une étanchéité suffisante, compte tenu de la vitesse d'avancement des fibres et de la longueur des tubulures. Typiquement, le vide à l'intérieur de la chambre 113 est par exemple de l'ordre de 0,1 bar, la longueur de la chambre à vide est d'environ 1 mètre.

En sortie de la chambre à vide 113 et de la tubulure de sortie 113b , l'arrangement 112 de fibres 111 traverse une chambre d'imprégnation 114 comportant un réservoir d'alimentation 115 (relié à une pompe doseuse non représentée) et un réservoir d'imprégnation 116 étanche totalement rempli de composition d'imprégnation 117 à base d'une résine durcissable du type vinylester (e.g., "E-Nova FW 2045" de DSM). A titre d'exemple, la composition 117 comporte en outre (à un taux pondéral de 1 à 2%) un agent photo-initiateur approprié pour le rayonnement UV et/ou UV-visible par lequel la composition sera ultérieurement traitée, par exemple l'oxyde de bis-(2,4,6-triméthylbenzoyl)-phénylphosphine ("Irgacure 819" de la société BASF). Elle peut également comporter (par exemple environ 5% à 15 %) d'un agent réticulant tel que par exemple le tris(2-hydroxy éthyl)isocyanurate triacrylate (« SR 368 » de la société Sartomer). Bien entendu, la composition d'imprégnation 117 est à l'état liquide.

Préférentiellement, la longueur de la chambre d'imprégnation est de plusieurs mètres, par exemple comprise entre 2 et 10 m, en particulier entre 3 et 5 m.

Ainsi, ressort de la chambre d'imprégnation 114, dans une tubulure de sortie 118 étanche (toujours sous vide primaire), un imprégné qui comporte par exemple (% en poids) de 65 à 75% de fibres solides 111, le reste (25 à 35%) étant constitué par la matrice liquide d'imprégnation 117.

L'imprégné passe ensuite à travers des moyens de calibrage 119 comportant au moins une filière de calibrage 120 dont le canal (non représenté ici), par exemple de forme circulaire, rectangulaire ou encore conique, est adapté aux conditions particulières de réalisation. A titre d'exemple, ce canal a une section droite minimale de forme circulaire dont l'orifice aval a un diamètre légèrement supérieur à celui du monobrin visé. Ladite filière a une longueur qui est typiquement supérieure d'au moins 100 fois à la dimension minimale de la section minimale. Elle a pour fonction d'assurer une grande précision dimensionnelle au produit fini, elle peut également jouer un rôle de dosage du taux de fibre par rapport à la résine. Selon une variante de réalisation possible, la filière 120 peut être directement intégrée à la chambre d'imprégnation 114, ce qui évite par exemple l'emploi de la tubulure de sortie 118.

Préférentiellement, la longueur de la zone de calibrage est de plusieurs centimètres, par exemple comprise entre 5 et 50 cm, en particulier entre 5 et 20 cm.

Grâce aux moyens de calibrage (119, 120) est obtenu à ce stade un monobrin composite "liquide" (121), liquide au sens que sa résine d'imprégnation est à ce stade toujours liquide, dont la forme de la section droite est préférentiellement essentiellement circulaire.

En sortie des moyens de calibrage (119, 120), le monobrin composite liquide (121) ainsi obtenu est ensuite polymérisé par passage à travers une chambre d'irradiation UV (122) comportant un tube en verre étanche (123) à travers lequel circule le monobrin composite ; ledit tube, dont le diamètre est typiquement de quelques cm (par exemple 2 à 3 cm), est irradié par une pluralité (ici, par exemple au nombre de 4) d'irradiateurs UV (124) en ligne (lampes "UVAprint" de la société Dr. Hönle, de longueur d'onde 200 à 600 nm) disposés à courte distance (quelques cm) du tube en verre. Préférentiellement, la longueur de la chambre d'irradiation est de plusieurs mètres, par exemple comprise entre 2 et 15 m, en particulier entre 3 et 10 m. Le tube d'irradiation 123 est dans cet exemple parcouru par un courant d'azote. Les conditions d'irradiation sont préférentiellement ajustées de telle manière que, en sortie de la chambre d'imprégnation, la température du monobrin en CVR, mesurée en surface de ce dernier (par exemple à l'aide d'un thermocouple), soit supérieure à la Tg (Tg₁) de la résine réticulée (en d'autres termes supérieure à 150°C), et plus préférentiellement inférieure à 270°C.

Une fois la résine polymérisée (durcie), le monobrin en CVR (125), cette fois à l'état solide, entraîné dans le sens de la flèche F, arrive ensuite sur sa bobine de réception finale (126). On obtient finalement un bloc composite terminé de fabrication tel que schématisé à la figure 1, sous la forme d'un monobrin en CVR continu (10), de très grande longueur, dont les filaments de verre unitaires (101) sont répartis de manière homogène dans tout le volume de résine durcie (102). Son diamètre est par exemple égal à environ 1 mm. Le procédé décrit ci-dessus peut être mise en œuvre à haute vitesse, de préférence supérieure à 50 m/min, par exemple entre 50 et 150 m/min.

Il a été ensuite revêtu d'une couche (12) de benzoxazine, par imprégnation dans un bain (liquide) de solvant (acétone) comportant 20% en poids d'une composition de résine benzoxazine commerciale (« XU 35910 » de la société Hunstman), composition comportant la résine benzoxazine proprement dite (85%) et, à titre d'additifs, un durcisseur époxy (« CY179 » ; 6%) permettant d'augmenter la Tg de la couche de benzoxazine une fois réticulée, et un agent plastifiant du type ATBN (« Hypro 1300X16 ATBN » ; 9%) pour diminuer la viscosité du liquide d'imprégnation.

La benzoxazine de départ ci-dessus était une bis-benzoxazine à base thiodiphénol répondant à la formule (e-3) de la figure 9 (dans la configuration cycles oxazine fermés) :

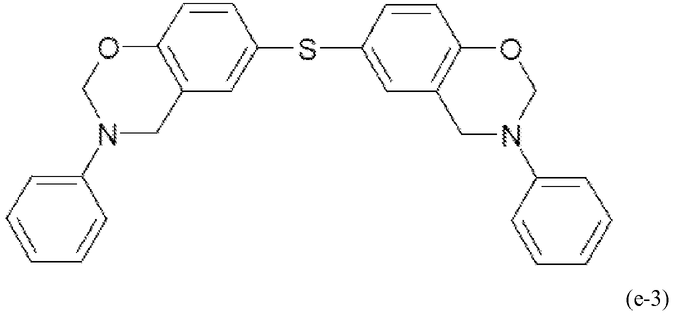

En sortie de bain, le monobrin en CVR ainsi imprégné de benzoxazine a été séché et prépolymérisé par passage (20 m/min) dans un tunnel chauffant (30 s à 180°C), pour l'obtention d'un matériau multi-composite conforme à l'invention (par exemple renfort R-2 tel que schématisé à la figure 2), à ce stade avec sa couche de benzoxazine dans un état pré-polymérisé.

Puis, ainsi revêtu de sa couche (12) de benzoxazine prépolymérisée, le renfort multi-composite conforme à l'invention , pour cet exemple de réalisation, a été ensuite soumis à une opération supplémentaire de gainage par une matière polyester thermoplastique, en l'occurrence un PBT (« Riteflex 677 » de la société Ticona-Celanese ; densité égale à 1,29 ; Tg égale à environ 54°C ; température de fusion égale à environ 220°C) par passage à travers une ligne d'extrusion (extrudeuse de type Maillefer « NMA30 » (Suisse) ; tête d'extrusion portée à environ 290°C) puis refroidissement à température ambiante, comme déjà décrit précédemment, ainsi que dans les demandes WO 2015/090973, WO 2015/165777, WO 2016/116457, WO 2016/189209 et WO 2016/189126 précitées.

Ainsi obtenu terminé de fabrication, pourvu de ses deux couches, première couche de benzoxazine (12) d'une part, seconde couche de PBT (14) d'autre part, comme schématisé à la figure 11, le renfort de l'invention (R-4) présentaient les propriétés finales suivantes (mesurées à 23°C):
D_{M} égal à environ 1,0 mm ; Eb égale à environ 3 µm ; Et égale à environ 0,2 mm ; D_{R} égal à environ 1,4 mm ; allongement à la rupture égal à environ 3,8 % ; module initial en extension égal à environ 45 GPa ; taux pondéral de fibres de verre dans le monobrin égal à environ 70% ; module initial en extension de la résine vinylester thermodurcie égal à environ 3,5 GPa ; Tg et module en flexion de la résine benzoxazine égaux respectivement à environ 215°C et 3,5 GPa ; module initial en extension du PBT égal à environ 1100 MPa ; allongement à la rupture du PBT supérieur à 10%.

Des tests d'adhésion ont été ensuite conduits au laboratoire sur des monobrins en CVR conformes à l'invention (revêtus de benzoxazine comme décrit précédemment) préalablement enrobés, sur une longueur de 40 mm, dans un moule contenant la matière thermoplastique (polyester PBT) à l'état fondu puis refroidis à température ambiante. Puis, on a mesuré les forces d'arrachage (extraction par pinces sur machine de traction « INSTRON3 ») de ces monobrins en CVR à travers la matrice de PBT, comparativement à des renforts multi-composites de l'art antérieur tels que décrits dans les demandes internationales précitées (WO 2015/090973 et suivantes).

Selon ces demandes de l'art antérieur, pour rappel, des monobrins en CVR témoins (non conformes à l'invention) ont été soumis, avant leur enrobage par la matière thermoplastique polyester, à une simple opération d'encollage par passage dans un bain aqueux (environ 94% d'eau) essentiellement à base de résine époxy (polyglycérol polyglycidyl éther « DENACOL » EX-512 de Nagase ChemteX Corporation, environ 1%) et de composé isocyanate (bloqué caprolactame, « GRILBOND » IL-6 de EMS, environ 5%), étape d'encollage suivie d'un séchage (30 s à 185°C) puis d'un traitement thermique (30 s à 200°C).

On a constaté, de manière inattendue, que les forces d'arrachage étaient en moyenne (sur 10 mesures) multipliées par près de 2,5 pour les renforts conformes à l'invention de l'invention (14,5 MPa versus 5,9 MPa), grâce à la présence de leur couche (12) de benzoxazine.

Le matériau ou renfort multi-composite de l'invention ainsi fabriqué est avantageusement utilisable, notamment sous la forme d'un stratifié multicouches conforme à l'invention, pour le renforcement de produits semi-finis ou d'articles finis en caoutchouc, en particulier de bandages, pneumatiques ou non pneumatiques, de tous types de véhicules, en particulier de véhicules tourisme ou véhicules industriels tels que Poids-lourd, Génie civil, avions, autres véhicules de transport ou de manutention.

## Revendications

1. Matériau multi-composite (R1, R2) comportant au moins un monobrin (10) en composite verre-résine comportant des filaments de verre (101) noyés dans une résine polyester thermodurcie (102), **caractérisé en ce que** ledit monobrin est revêtu d'au moins une couche (12) de benzoxazine.

2. Matériau selon la revendication 1, dans lequel la couche (12) de benzoxazine comporte un monomère benzoxazine.

3. Matériau selon la revendication 2, dans lequel le monomère benzoxazine est une monobenzoxazine répondant à la formule (A) dans laquelle R représente un radical hydrocarboné pouvant comporter un hétéroatome :

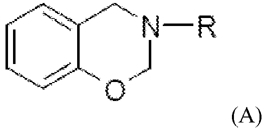

4. Matériau selon la revendication 2, dans lequel le monomère benzoxazine est une bis-benzoxazine.

5. Matériau selon la revendication 4, dans lequel la bis-benzoxazine répond à au moins une des formules (B) ou (C) dans lesquelles : X représente un groupement de liaison au moins divalent, aliphatique, cycloaliphatique ou aromatique, comportant au moins un atome de carbone ; Z représente un groupement de liaison au moins divalent et les deux radicaux R, identiques ou différents, représentent un radical hydrocarboné pouvant comporter un hétéroatome :

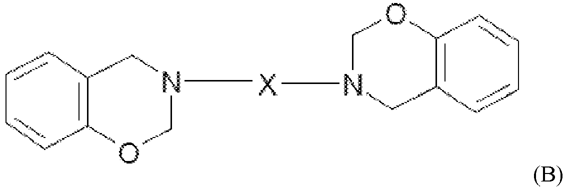

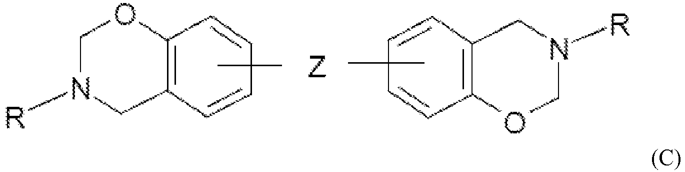

6. Matériau selon l'une quelconque des revendications 1 à 5, dans lequel la couche (12) de benzoxazine comporte une polybenzoxazine dont les unités récurrentes comportent au moins un motif répondant à la formule (F-I) et/ou, après ouverture des cycles oxazine, à la formule (F-II) dans lesquelles X représente un groupement de liaison au moins divalent, aliphatique, cycloaliphatique ou aromatique, comportant au moins un atome de carbone :

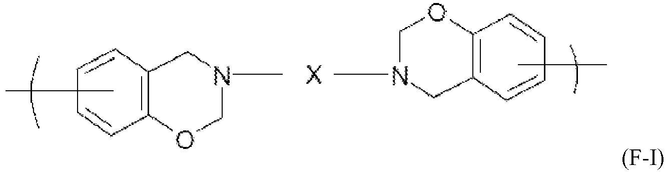

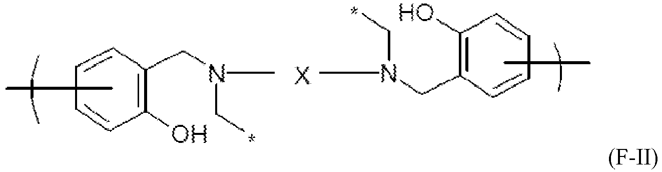

7. Matériau selon l'une quelconque des revendications 1 à 6, dans lequel la couche (12) de benzoxazine comporte une polybenzoxazine dont les unités récurrentes comportent au moins un motif répondant à la formule (G-I) et/ou, après ouverture des cycles oxazine, à la formule (G-II) dans lesquelles Z représente un groupement de liaison au moins divalent :

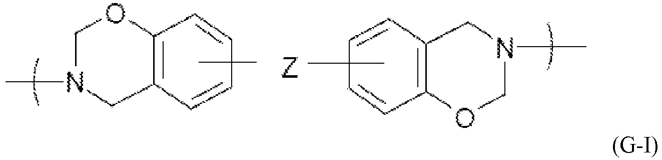

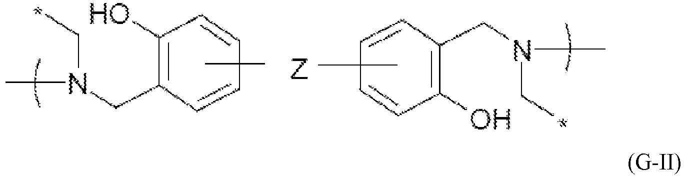

8. Matériau selon la revendication 7, dans lequel lesdites unités récurrentes comportent au moins un motif répondant à la formule (H-I) et/ou, après ouverture des cycles oxazine, à la formule (H-II) :

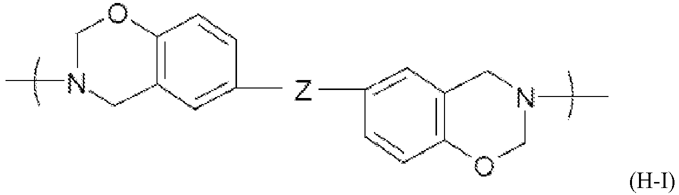

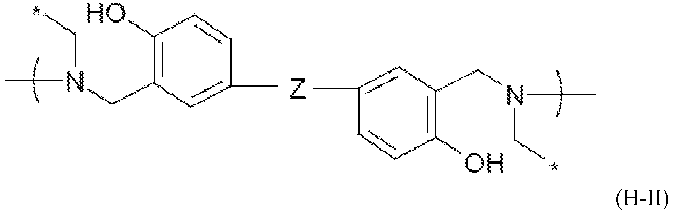

9. Matériau selon l'une quelconque des revendications 1 à 8, dans lequel la résine thermodurcie est une résine vinylester, de préférence une résine époxyvinylester.

10. Matériau selon l'une quelconque des revendications 1 à 9, se présentant sous la forme d'un élément de renforcement longiligne ou « renfort ».

11. Matériau selon la revendication 10, dont le diamètre noté D_{R} est compris entre 0,3 et 50 mm, de préférence dans un domaine de 0,5 à 30 mm.

12. Stratifié multicouches comportant au moins un matériau selon les revendications 10 ou 11, disposé entre et au contact de deux couches de composition de caoutchouc.

13. Article fini ou produit semi-fini en caoutchouc comportant un matériau selon les revendications 10 ou 11, ou un stratifié selon la revendication 12.

14. Bandage pour véhicule comportant un matériau selon les revendications 10 ou 11, ou un stratifié selon la revendication 12.

15. Utilisation d'un matériau selon les revendications 10 ou 11, ou d'un stratifié selon la revendication 12, comme élément de renforcement de produits semi-finis ou d'articles finis en caoutchouc.

## Patentansprüche

1. Multiverbundmaterial (R1, R2), das mindestens ein Monofilament (10) aus einem Glas-Harz-Verbund umfasst, der in einem duroplastischen Polyesterharz (102) eingebettete Glasfilamente (101) umfasst, **dadurch gekennzeichnet, dass** das Monofilament mit mindestens einer Benzoxazinschicht (12) beschichtet ist.

2. Material nach Anspruch 1, wobei die Benzoxazinschicht (12) ein Benzoxazinmonomer umfasst.

3. Material nach Anspruch 2, wobei es sich beim Benzoxazinmonomer um ein Monobenzoxazin mit der Formel (A) handelt, wobei R für einen Kohlenwasserstoffrest steht, der ein Heteroatom umfassen kann:

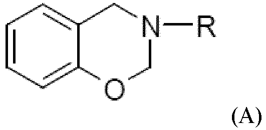

4. Material nach Anspruch 2, wobei das Benzoxazinmonomer ein Bisbenzoxazin ist.

5. Material nach Anspruch 4, wobei das Bisbenzoxazin mindestens einer der Formeln (B) oder (C) entspricht, wobei: X für eine mindestens zweiwertige aliphatische, cycloaliphatische oder aromatische Verbindungsgruppe steht, die mindestens ein Kohlenstoffatom umfasst; Z für eine mindestens zweiwertige Bindungsgruppe steht und die beiden Reste R, die gleich oder verschieden sind, für einen Kohlenwasserstoffrest stehen, der ein Heteroatom umfassen kann:

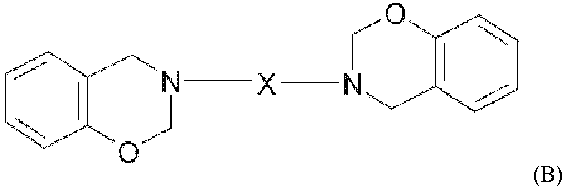

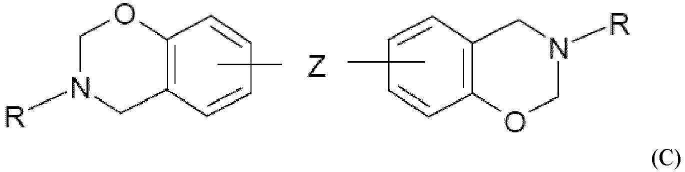

6. Material nach einem der Ansprüche 1 bis 5, wobei die Benzoxazinschicht (12) ein Polybenzoxazin umfasst, dessen Repetiereinheiten mindestens eine Einheit umfassen, die der Formel (F-I) und/oder nach der Öffnung der Oxazinringe der Formel (F-II) entspricht, wobei die X für eine mindestens zweiwertige aliphatische, cycloaliphatische oder aromatische Verbindungsgruppe stehen, die mindestens ein Kohlenstoffatom umfasst:

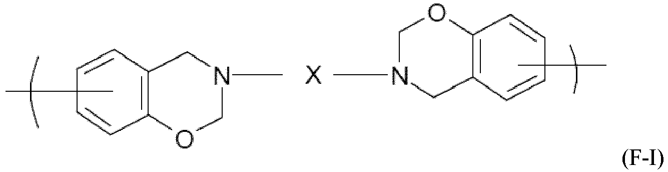

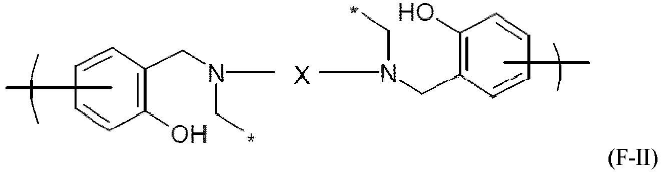

7. Material nach einem der Ansprüche 1 bis 6, wobei die Benzoxazinschicht (12) ein Polybenzoxazin umfasst, dessen Repetiereinheiten mindestens eine Einheit umfassen, die der Formel (G-I) und/oder nach der Öffnung der Oxazinringe der Formel (G-II) entspricht, wobei die Z für eine mindestens zweiwertige Verbindungsgruppe stehen:

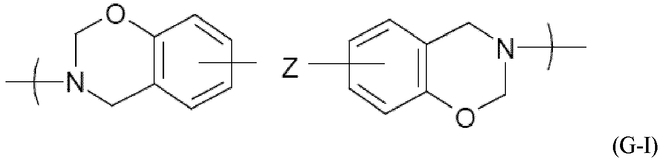

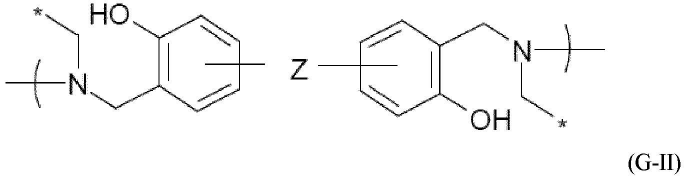

8. Material nach Anspruch 7, wobei die Repetiereinheiten mindestens eine Einheit umfassen, die der Formel (H-I) und/oder nach der Öffnung der Oxazinringe der Formel (H-II) entspricht:

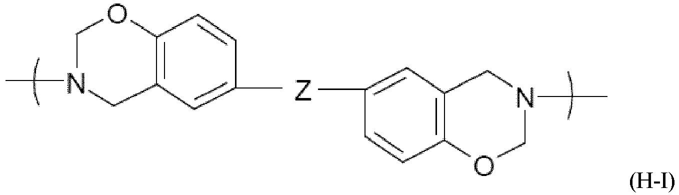

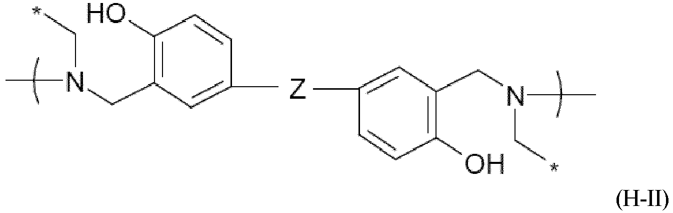

9. Material nach einem der Ansprüche 1 bis 8, wobei es sich beim Duroplast um ein Vinylester-Harz, vorzugsweise ein Epoxyvinylester-Harz, handelt.

10. Material nach einem der Ansprüche 1 bis 9, das in Form eines länglichen Verstärkungselements oder einer "Verstärkung" vorliegt.

11. Material nach Anspruch 10, wobei der als D_{R} bezeichnete Durchmesser zwischen 0,3 und 50 mm, vorzugsweise in einem Bereich von 0,5 bis 30 mm, liegt.

12. Mehrlagiger Schichtstoff, der mindestens ein Material nach den Ansprüchen 10 oder 11 umfasst, das zwischen und in Kontakt mit den beiden Schichten aus einer Kautschukzusammensetzung angeordnet ist.

13. Fertigartikel oder Halbfabrikat aus Kautschuk, der bzw. das ein Material nach den Ansprüchen 10 oder 11 oder einen Schichtstoff nach Anspruch 12 umfasst.

14. Fahrzeugreifen, der ein Material nach den Ansprüchen 10 oder 11 oder einen Schichtstoff nach Anspruch 12 umfasst.

15. Verwendung eines Materials nach Anspruch 10 oder 11 oder eines Schichtstoffs nach Anspruch 12 als Verstärkungselement von Halbfabrikaten oder Fertigartikeln aus Kautschuk.

## Claims

1. Multicomposite material (R1, R2) including at least one monofilament (10) made of glass-resin composite including glass filaments (101) embedded in a thermoset polyester resin (102), **characterized in that** said monofilament is coated with at least one layer (12) of benzoxazine.

2. Material according to Claim 1, wherein the layer (12) of benzoxazine includes a benzoxazine monomer.

3. Material according to Claim 2, wherein the benzoxazine monomer is a monobenzoxazine corresponding to formula (A) in which R represents a hydrocarbon-based radical which may include a heteroatom:

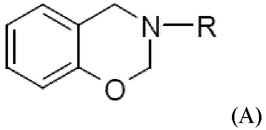

4. Material according to Claim 2, wherein the benzoxazine monomer is a bis-benzoxazine.

5. Material according to Claim 4, wherein the bis-benzoxazine corresponds to at least one of the formulae (B) or (C) in which: X represents an at least divalent, aliphatic, cycloaliphatic or aromatic bonding group, including at least one carbon atom; Z represents an at least divalent bonding group and the two radicals R, which may be identical or different, represent a hydrocarbon-based radical which may include a heteroatom:

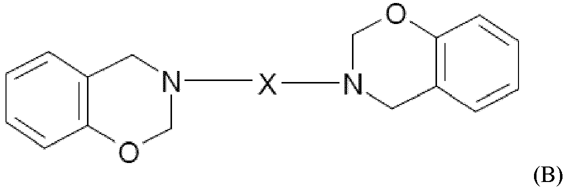

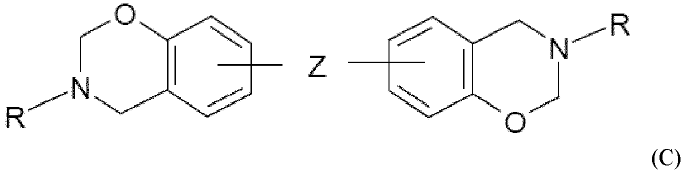

6. Material according to any one of Claims 1 to 5, wherein the benzoxazine layer (12) includes a polybenzoxazine, the repeating units of which include at least one unit corresponding to formula (F-I) and/or, after opening of the oxazine rings, to formula (F-II) in which X represents an at least divalent, aliphatic, cycloaliphatic or aromatic bonding group, including at least one carbon atom:

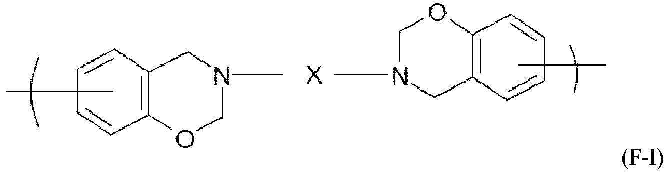

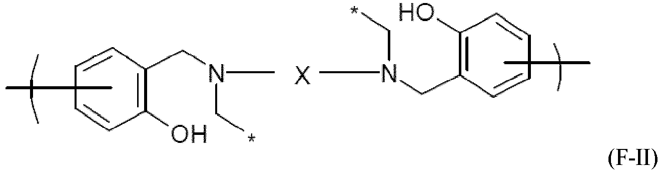

7. Material according to any one of Claims 1 to 6, wherein the benzoxazine layer (12) includes a polybenzoxazine, the repeating units of which include at least one unit corresponding to formula (G-I) and/or, after opening of the oxazine rings, to formula (G-II) in which Z represents an at least divalent bonding group:

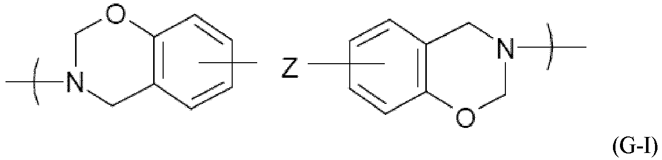

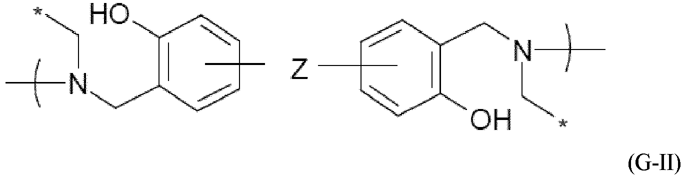

8. Material according to Claim 7, wherein said repeating units include at least one unit corresponding to formula (H-I) and/or, after opening of the oxazine rings, to formula (H-II):

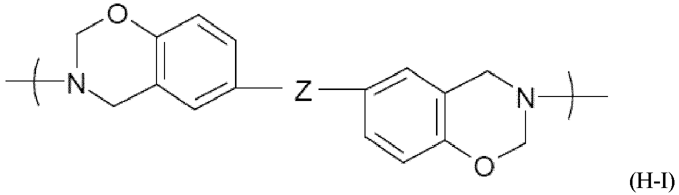

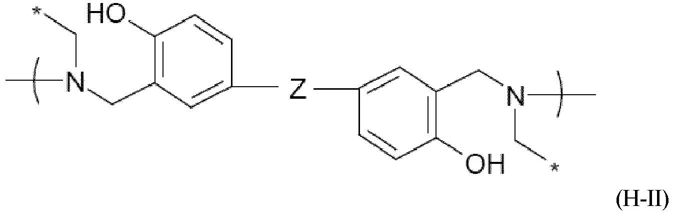

9. Material according to any one of Claims 1 to 8, wherein the thermoset resin is a vinyl ester resin, preferably an epoxy vinyl ester resin.

10. Material according to any one of Claims 1 to 9, which is in the form of a longilineal reinforcing element or "reinforcer".

11. Material according to Claim 10, the diameter denoted D_{R} of which is between 0.3 and 50 mm, preferably within a range from 0.5 to 30 mm.

12. Multilayer laminate including at least one material according to Claim 10 or 11, positioned between and in contact with two layers of rubber composition.

13. Finished article or semi-finished product made of rubber including a material according to Claim 10 or 11 or a laminate according to Claim 12.

14. Vehicle tyre including a material according to Claim 10 or 11 or a laminate according to Claim 12.

15. Use of a material according to Claim 10 or 11, or of a laminate according to Claim 12, as a reinforcing element for semi-finished products or finished articles made of rubber.
